# EUROPÄISCHE PATENTSCHRIFT

(11) **EP 4 054 475 B1**
(45) Veröffentlichungstag und Bekanntmachung des Hinweises auf die Patenterteilung: **10.04.2024**
(21) Anmeldenummer: 19802132.1
(22) Anmeldetag: 07.11.2019
(51) Int. Cl.: A61C 8/00, A61C 9/00

(54) **DENTALMODELL MIT EINEM LÖSBAREN ZAHNSTUMPF**
DENTAL MODEL COMPRISING A DETACHABLE TOOTH STUMP
MODÈLE DENTAIRE COMPRENANT UN MOIGNON DE DENT DÉTACHABLE

(43) Veröffentlichungstag der Anmeldung: 14.09.2022
(73) Patentinhaber: Exocad GmbH, 64293 Darmstadt (DE)
(72) Erfinder: STEINBRECHER, Tillmann, 64342 Seeheim-Jugenheim (DE); SCHÜTTLER, Akira, 55130 Mainz (DE); BÖTTNER, Stefan Thomas, 64342 Seeheim-Jugenheim (DE)
(74) Vertreter: Richardt Patentanwälte PartG mbB
(86) Internationale Anmeldenummer: PCT/EP2019/080550
(87) Internationale Veröffentlichungsnummer: WO 2021/089156

(56) Entgegenhaltungen:
- EP-A1- 1 156 463
- EP-B1- 1 156 463
- EP-B1- 2 466 571
- WO-A1-2011/103879
- WO-A1-2019/202110
- DE-A1- 10 019 339
- DE-B4- 10 019 339
- US-A- 5 030 102
- US-A1- 2019 254 792

## Beschreibung

### TECHNISCHES GEBIET

Die Erfindung betrifft ein Dentalmodell für eine zahntechnische Modellierung, sowie ein Verfahren zur Herstellung eines Dentalmodells.

### VERWANDTER STAND DER TECHNIK

Im Stand der Technik werden für eine zahntechnische Modellierung insbesondere Dentalmodelle mit Aufnahmekavitäten für herausnehmbare Zahnstümpfe als Arbeitsunterlage benutzt. Hierbei wird unter dem Begriff "Modellbasis" eine dreidimensionale, patientenindividuelle 1:1-Reproduktion zumindest eines Teils eines Kiefers, also des von Zahnfleisch umgebenen Unter- und/oder Oberkieferknochens, in welchem auch zumindest ein Zahn und/oder Zahnstumpf und/oder Implantat und/oder Pfeiler einer Zahnprothese oder dergleichen vorhanden sein kann, verstanden. Um einen optimalen Zugang von allen Seiten zu der zirkulär verlaufenden Präparationsgrenze am Zahnstumpf zu erhalten, bedarf es eines Dentalmodells, insbesondere einer Modellbasis mit lösbaren Zahnstümpfen.

Unter der Präparationsgrenze wird in dem Zusammenhang der Abschluss der bearbeiteten Zahn-Hartsubstanz und der Beginn der unbearbeiteten Zahnoberfläche verstanden. Diese Zahnstümpfe müssen aber im Laufe der Bearbeitung sehr oft aus dem Dentalmodell, insbesondere aus der Modellbasis herausgenommen und wieder in eine zugehörige Aufnahmekavität eingesetzt werden. Dabei muss die Modellbasis eine exakte reproduzierbare Position im Zusammenwirken mit dem Schaft des Zahnstumpfs sicherstellen. Es kommt dabei in höchstem Maße auf die gefertigten Toleranzen und ein gutes Handling für den Benutzer, meist den Zahntechniker an.

Die herausnehmbaren Zahnstümpfe entsprechen hierbei zum Beispiel den Zähnen, die einzeln mit einem Zahnersatzteil zu überkronen sind. Es können selbstverständlich auch andere extraoral gefertigte Zahnersatzteile wie zum Beispiel kleine Keramikaufbauten wie Inlays, Onlays, Veneers zum Einsatz kommen. Zum Ersatz ganzer Zähne dienen beispielsweise auch Brücken, deren Pfeiler wie zur Aufnahme von Kronen präpariert werden und ebenso mittels eines Dentalmodells angepasst werden müssen.

Bislang ist es immer noch üblich, aus einem Gipsmodell, welches aus einem Kieferabdruck erstellt worden ist, die für die Behandlung vorgesehenen Zähne bzw. die Zahnstümpfe in der Modellbasis mechanisch herauszutrennen. Hierfür sind verschiedene Methoden bekannt.

Nach einer häufig angewendeten Methode werden die Zahnstümpfe durch Sägeschnitte herausgelöst. Dieses Verfahren bringt schwerwiegende Nachteile mit sich, unter anderem die Zerstörung marginaler Bereiche der Zahnstümpfe und/oder der Modellbasis selbst. Hierdurch geht in der Regel auch ein Teil des zervikalen Bereichs einschließlich der Papille verloren.

Nun ist aus der GB 2 122 796 A ein Dentalmodell für Schulungs- bzw. Ausbildungszwecke bekannt, wobei dieses Dentalmodell für eine kostenoptimierte Massenproduktion entworfen ist. Das somit generische Dentalmodell weist eine universelle Modellbasis mit einer durchgängigen, u-förmigen, der Kontur der Modellbasis folgenden Aufnahmekavität auf. Die U-förmige Aufnahmekavität ist so ausgelegt, dass alle reponierbaren Zahnstümpfe an jeder Stelle der U-förmigen Aufnahmekavität entnommen und reponiert werden können.

Die Oberfläche der Modellbasis ist aus einem relativ elastisch verformbaren gummiartigen Material hergestellt. Die U-förmige Aufnahmekavität weist zumindest einen gummiartigen Abschnitt auf, in den die Zahnstümpfe einzeln herausnehmbar und reponierbar sind. Der Schaft eines zugehörigen Zahnstumpfs weist zudem eine Art "Anschlag" bzw. eine Art "Schulter" auf, welche beim Einsetzen in die U-förmige Aufnahmekavität die Einsetztiefe begrenzt. Der Schaft weist ferner einen Vorsprung auf, welcher in eine Aussparung in der U-förmigen Nut eingreifen kann, wodurch der Zahnstumpf mit dem Zahnkranz formschlüssig verbindbar ist.

Jedoch ist das Dentalmodell nicht zur prothetischen Rekonstruktion eines Präparationsabschnitts eines patientenindividuellen Zahnersatzteils geeignet. Die u-förmige Aufnahmekavität, in Kombination mit der Aussparung und dem Vorsprung des Zahnstumpfs stellt nicht sicher, dass die exakte Position eines Zahnstumpfs, welcher zur prothetischen Rekonstruktion vorgesehen ist, eingehalten werden kann. Die Aussparung ist ebenso wie die u-förmige Nut durchgängig, der Kontur der Modellbasis nachfolgendend ausgebildet. Somit ist es durchaus möglich, den Zahnstumpf entlang der Kontur der Modellbasis innerhalb der u-förmigen Nut zu verschieben. Zudem bildet die Nut und der Vorsprung keinen verdrehsicheren Formschluss aus. Somit ist eine exakte Position des Zahnstumpfs im Dentalmodell, welche in Abhängigkeit zu dem oder den Antagonisten und/oder den approximalen Nachbarzähnen zu betrachten ist, nicht exakt reproduzierbar.

Aus der WO 2011/103879 A1 ist ein Dentalmodell bekannt, welche mittels eines CAD-CAM-Verfahrens ("Computer Aided Design" - rechnerunterstütztes Konstruieren - und "Computer Aided Manufacturing" - rechnerunterstützte Fertigung) virtuell entworfen und anschließend physisch durch ein generisches Verfahren, insbesondere einem 3D- Druckverfahren hergestellt wird. Das Dentalmodel umfasst eine Modellbasis, mit einer Aufnahmekavität in der Modellbasis und einen herausnehmbaren Zahnstumpf, wobei der Zahnstumpf einen Präparationsabschnitt und einen Schaft aufweist, wobei der Präparationsabschnitt zur prothetischen Rekonstruktion eines Zahns, und der Schaft zum Einsetzen entlang einer Einschubrichtung in die Aufnahmekavität in der Modellbasis vorgesehen ist, und wobei der Schaft in der Aufnahmekavität mit der Modellbasis reibschlüssig lösbar verbunden ist.

Der Schaft und/oder Aufnahmekavität sind der Art ausgebildet, dass diese im eingesetzten Zustand nur an wenigen Stellen mithilfe von Stützelementen zum Positionieren sogenannte Reibungspunkte ausbilden und hierdurch eine reibschlüssige lösbare Verbindung herstellen. Die Stützelemente, welche die Reibungspunkte ausbilden, berühren nur einen Bruchteil der korrespondierenden Fläche des Schafts bzw. der Wandung der Aufnahmekavität. Die Stützelemente, welche die Reibungspunkte ausbilden, können als abgeschnittene Pyramiden oder als quadratische Kegelstümpfe oder rechteckige Kegelstümpfe, ebene Stäbe, Quadrate, Ovale, Sterne oder Dreiecke ausgestaltet sein, wobei diese aufgeführten geometrischen Formen an der Außenfläche des Schafts oder der Außenfläche der Wandung der Aufnahmekavität hervorstehen bzw. herausragen.

Die EP 1 156 463 A1 beschreibt ein Dentalmodell, insbesondere für Übungszwecke, welches mit einer Halteplatte mit Ausnehmungen für künstliche Zähne versehen ist, die je einen Zahnstumpf aufweisen, der in die betreffende Ausnehmung passt. Eine Zahnfleischmasse übergreift sowohl die Zähne der Zahnreihe als auch die Ausnehmungen. Die Zähne werden an der Halteplatte und je in ihren Ausnehmungen mit Friktion lösbar gehalten.

Die DE 100 19 339 A1 beschreibt ein Implantat zur Aufnahme eines Verbindungszapfens eines medizinischen Elements. Das Implantat weist eine Längsachse, ein distales Ende und ein proximales Ende auf, von dem aus sich eine Aufnahmeausnehmung für den Verbindungszapfen in Richtung der Längsachse in das Innere des Implantats erstreckt. Das Implantat ist an seiner äußeren Mantelfläche kraft- oder formschlüssig mit der inneren Mantelfläche einer Aufnahmebohrung in einem Knochen eines menschlichen oder tierischen Körpers verbindbar. Der an die Aufnahmeausnehmung angepasste Verbindungszapfen ist kraft- oder formschlüssig mit der inneren Mantelfläche der Aufnahmeausnehmung verbindbar. Um die Verbindung zwischen dem medizinischen Element und dem Implantat schnell herstellen und ebenso schnell wieder aufheben zu können, ist die innere Mantelfläche der Aufnahmeausnehmung mit mindestens einer senkrecht zur Längsachse des Implantats ausgerichteten und eine Hinterschneidung bildenden Vertiefung versehen mit der ein radialer außen vorstehender Vorsprung eines elastischen Clipelements des Verbindungszapfens in Eingriff bringbar ist.

Die US 5 030 102 A beschreibt eine Halterung für einen auswechselbaren Zahn in einem künstlichen zahnärztlichen Kiefermodell für Lehr- und Übungszwecke, welche mit geringem Aufwand an gegenständlicher Ausbildung und an Zeit ein rasches Auswechseln der Zähne ermöglicht. Hierzu ist der Zahn mit einem zylindrischen Schaft in einer Ausnehmung des Kiefermodells elastisch gehalten.

Die WO 2019/202110 A1 beschreibt einen Zahnstumpf für ein Dentalmodell, welches mindestens einen Zahn und mindestens eine Zahnstumpfaufnahme zum mindestens teilweisen Aufnehmen des Zahnstumpfs umfasst. Der Zahnstumpf umfasst einen Zahnabschnitt in Form eines menschlichen oder tierischen Zahnes und einen eine Kupplungsabschnittslängsachse definierenden Kupplungsabschnitt zum kraft- und/oder formschlüssigen in Eingriff Bringen mit der mindestens einen Zahnstumpfaufnahme des Dentalmodells in einer Kupplungsstellung. Der Zahnstumpf umfasst eine Positioniereinrichtung zum definierten räumlichen Positionieren des Zahnstumpfs in der Zahnstumpfaufnahme in der Kupplungsstellung. Zum Verbessern der Passgenauigkeit des Zahnstumpfs in der Zahnstumpfaufnahme des Dentalmodells umfasst die Positioniereinrichtung mindestens ein am Kupplungsabschnitt ausgebildetes Positionierelement. Das mindestens eine Positionierelement ist aus einer Grundstellung entgegen der Wirkung einer Rückstelleinrichtung in eine auf die Kupplungsabschnittslängsachse oder im Wesentlichen auf die Kupplungsabschnittslängsachse hin oder von dieser weg ausgelenkte Haltestellung auslenkbar.

Die EP 2 466 571 A1 beschreibt ein Übungsmodell zur Erlernung von zahnmedizinischen Fertigkeiten mit einer an einem Phantomkopf oder Artikulator befestigbaren Schale, in die eine Vielzahl von Durchgangsöffnungen eingearbeitet ist, mit einem oder mehreren Lehrzähnen, der oder die einzeln in der Durchgangsöffnung der Schale angeordnet ist bzw. sind, und mit einer Trägerplatte, die an der Schale arretierbar ist und durch die der jeweilige Lehrzahn an der Schale lösbar fixiert ist. Zum zuverlässigen und dauerhaften Halten jedes Lehrzahns in dem Übungsmodell ist an der Trägerplatte mindestens ein Zapfen angeformt, in den eine Aufnahmekammer eingearbeitet ist. An jedem Lehrzahn steht ein Halteglied ab, das die Durchgangsöffnung der Schale im montierten Zustand durchgreift Das einzelne Halteglied ist zu einer der Aufnahmekammer der Zapfen fluchtend ausgerichtet und in dieser eingesteckt. Zwischen der Schale und derTrägerplatte ist eine Halteleiste angeordnet.

Die US 2019/254792 A1 beschreibt ein Zahnmodell, welches eine erste Komponente umfasst, die einen Teil des Kiefers eines Patienten darstellt, und eine zweite Komponente, die abnehmbar an der ersten Komponente befestigbar ist. Die zweite Komponente stellt eine Zahnstruktur von Interesse dar, wie zum Beispiel einen Zahn oder ein Zahnimplantat. Der Erfindung liegt die Aufgabe zugrunde ein verbessertes Dentalmodell und ein Verfahren zur Herstellung eines Dentalmodells bereitzustellen. Die der Erfindung zugrunden liegenden Aufgaben werden durch die Merkmale der unabhängigen Patentansprüche gelöst. Ausführungsformen der Erfindung sind in den abhängigen Patentansprüchen angegeben.

### OFFENBARUNG DER ERFINDUNG

Die Erfindung ist durch die unabhängigen Ansprüche definiert.

Beschrieben ist ein Dentalmodell für eine zahntechnische Modellierung mit einer Modellbasis und mit einem aus der Modellbasis herausnehmbaren Zahnstumpf, wobei die

Modellbasis eine Aufnahmekavität zur Aufnahme des Zahnstumpfes aufweist, wobei der Zahnstumpf einen Präparationsabschnitt aufweist, wobei der Präparationsabschnitt zur prothetischen Rekonstruktion eines Zahns und der Schaft zum Einsetzen entlang einer Einschubrichtung in die Aufnahmekavität ausgebildet ist, wobei die Modellbasis und/oder der Schaft ein elastisches Positionierungselement zum Positionieren des Zahnstumpfes relativ zur Modellbasis aufweisen.

Z.B. wird zuerst die patientenindividuelle Situation des physischen Patientengebisses mittels eins bildgebenden Verfahrens, insbesondere eines intraoralen Scans und/oder einer digitalen Volumentomographie, einer Röntgenaufnahme und/oder eines Scans oder einer taktilen Oberflächenvermessung eines Gipsabdrucks und/oder Gipsmodels, erfasst. Anschließend kann mit einer CAD/CAM-Software ("Computer Aided Design" - rechnerunterstütztes Konstruieren - und "Computer Aided Manufacturing" - rechnerunterstützte Fertigung) ein virtuelles patientenindividuelles Situationsmodell generiert und auf einer geeigneten Vorrichtung, vorzugsweise einem Bildschirm, visuell dargestellt werden.

Es werden hier auch unter bildgebenden Verfahren physikalische Erfassungsmethoden verstanden wie beispielsweise die Sonographie, die Erfassung mittels Magnetresonanztomographie, mittels Computertomographie oder mittels digitaler Volumentomographie.

Das durch die CAD/CAM-Software virtuell generierte patientenindividuelle Situationsmodell umfasst in einer 2D- und/oder 3D-Darstellung zumindest wenigstens einen Abschnitt des physischen Patientengebisses, insbesondere einen teilweisen Zahnkranz eines Patienten bzw. einen Teil des Unter- und/oder Oberkiefers des Patienten. Der für die dentale Restauration bzw. prothetischen Rekonstruktion vorgesehene Bereich wird virtuell generiert und ist somit auch visuell darstellbar.

Der für die dentale Restauration bzw. prothetischen Rekonstruktion vorgesehene Bereich umfasst ferner zumindest einen teilweisen Zahnkranz und/oder zumindest einen Zahn, oder einen bereits beschliffenen Zahn oder auch einen unbezahnten Bereich im Kiefer bzw. dem Zahnkranz. Ebenso kann auch ein bereits vorhandener implantatgestützter Zahnersatz, wobei dieser auch nur als ein Implantat (ohne Restauration) mit einem Scanmarker ausgebildet seien kann, in dem für eine dentale Restauration bzw. prothetischen Rekonstruktion vorgesehenen Bereich vorhanden sein.

In diesem Zusammenhang umfasst der für eine dentale Restauration vorgesehene Bereich z.B. auch einen gesunden Zahn, welcher keiner prothetischen Rekonstruktion bedarf. Vorgesehen ist jedoch, dass dieser gesunde Zahn aus dem noch herzustellenden physischen Dentalmodell, insbesondere aus der Modellbasis herausnehmbar und auch wieder reponierbar ist. Somit kann auch dieser Zahn welcher Teil der dentalen Restauration ist, auch funktional wirksam lösbar mit der Modellbasis verbunden bzw. funktional wirksam verbindbar sein, um diesen bei Bedarf entnehmen zu können. Dies ist insbesondere bei der Beurteilung der Präparationsgrenze eines approximal benachbarten Zahns, welcher zur prothetischen Rekonstruktion vorgesehen ist, notwendig.

Anschließend wird in dem patientenindividuellen virtuellen Situationsmodell, z.B. durch den Benutzer der CAD/CAM- Software, der für die dentale Restauration vorgesehene Bereich ausgewählt bzw. festgelegt. Wie bereits vorhergehend erläutert, kann dieser für die dentale Restauration vorgesehene Bereich, einen Zahn oder einen bereits beschliffenen Zahn oder auch einen unbezahnten Bereich oder ein anders gearteter Zahnersatz umfassen.

Insbesondere erfolgt die Festlegung des für die dentale Restauration vorgesehenen Bereichs, analog eines bekannten Zahnschemas, wie zum Beispiel das der Federation Dentaire Internationale (FDI). Hierdurch ist die Position im Kiefer bzw. im Zahnkranz eindeutig festgelegt. Im zahnlosen Kiefer werden auch die für eine dentale Restauration vorgesehenen Bereiche nach denjenigen Zähnen benannt, die sich im jeweiligen bezahnten Zahnkranzabschnitt befinden sollten. Fehlt beispielsweise der Zahn wegen Nichtanlage oder nach Extraktion und soll der fehlende Zahn beispielsweise durch ein Implantat oder durch ein Brückenglied oder eine Teilprothese ersetzt werden, so wird der zahnlose Zahnkranzabschnitt entsprechend dem Zahnschema bezeichnet.

Auch die zu ersetzenden oder bereits ersetzten Zähne beispielsweise durch ein Implantat, ein Brückenglied oder eine Teilprothese, erhalten in der Folge die gleiche Bezeichnung nach dem Zahnschema wie die bleibenden Zähne.

Vorzugsweise ist die jeweilige Präparationsgrenze des für die dentale Restauration vorgesehenen Bereichs, insbesondere eines Zahns, bereits durch die vorhergehende bildgebende Aufnahme, wie zum Beispiel eines intraoralen Scans bereits bekannt und wurde automatisch durch die CAD/CAM- Software festgelegt oder wird interaktiv durch den Benutzer mit CAD/CAM- Software festgelegt. Die Präparationsgrenze kann auch bereits zuvor zusammen mit der Generierung des virtuellen patientenindividuellen Situationsmodells automatisch durch die CAD/CAM- Software erkannt und markiert worden sein, sodass der Benutzer diese automatische Markierung nur noch bestätigt oder gegebenenfalls nachträglich interaktiv anpasst.

Ferner wird mit der CAD/CAM- Software in dem virtuellen, patientenindividuellen Situationsmodell, vorzugsweise nach einem Zahnschema, eine virtuelle Aufnahmekavität festgelegt und dementsprechend auch ein zugehöriger herausnehmbarer virtueller Zahnstumpf automatisch generiert.

Die visuelle Darstellung des nun vorliegenden virtuellen Dentalmodells für eine zahntechnische Modellierung erfolgt vorzugsweise über eine hierfür geeignete Vorrichtung, z. B. einer / einem Grafik User Interface (GUI) mit einem Bildschirm oder auch über eine Datenbrille.

Unter einem Zahnstumpf, sowohl in dem virtuellen wie auch dem physischen Dentalmodell, wird in dem Zusammenhang ein zur prothetischen Rekonstruktion vorgesehener Zahn, ein bereits beschliffener Zahn oder ein Implantat und/oder implantatgestützter Zahnersatz verstanden. Ebenso kann auch ein nicht zur prothetischen Rekonstruktion vorgesehener Zahn unter diese Definition fallen. Der herausnehmbare Zahnstumpf umfasst ferner einen Präparationsabschnitt und einen Schaft bzw. als eine Art "Schaft" ausgebildeter Abschnitt.

An dem Präparationsabschnitt wird im Wesentlichen die prothetische Rekonstruktion durchgeführt und bildet somit den sichtbaren Teil des Zahnstumpfs aus, wenn dieser in der Modellbasis reponiert ist. Die prothetische Rekonstruktion kann einzelne Zähne, Kieferabschnitte oder das komplette Kausystem betreffen. Hierzu können beispielsweise Inlays, Onlays, Veneers, Kronen und Brücken verwendet werden.

Der Schaft ist zum Einsetzen in die Aufnahmekavität in der Modellbasis vorgesehen und ermöglicht, in einer hierfür vorgesehenen Sollposition, dass der Zahnstumpf visuell begutachtet werden kann, insbesondere in Bezug auf die Einhaltung der Präparationsgrenze und den Abständen zu den approximal vorhandenen Zähnen und auch den gegenüberliegenden Antagonisten.

In der Regel wird das Dentalmodell mit der dentalen Restauration hierzu auch zusätzlich noch in einen sogenannten Artikulator eingesetzt. Je nach Einstellmöglichkeiten des Artikulators können mehr oder weniger genau die Kaubewegungen eines Patienten simuliert werden und hieraus ergeben sich weitere Anhaltspunkte für eine Anpassung der prothetischen Rekonstruktion. Ferner wird auch durch die CAD/CAM-Software eine bevorzugte Einschubrichtung, vorzugsweise entlang einer Einschubachse für den Zahnstumpf festgelegt, wobei diese Einschubrichtung auch nachträglich durch den Benutzer mittels der GUI in der CAD/CAM- Software angepasst werden kann.

Selbstverständlich kann der für eine dentale Restauration vorgesehenen Bereich auch vorsehen, dass mehrere virtuelle Aufnahmekavitäten erzeugt werden sollen, wobei jeder Aufnahmekavität immer nur ein Zahnstumpf zugehörig ist. Abschließend wird z.B. ein Datensatz für eine generische Herstellung, vorzugsweise eines additiven Herstellungsverfahrens, insbesondere des 3D-Drucks generiert. Unter Verwendung dieses Datensatzes kann nun ein physisches Dentalmodell für eine zahntechnische Modellierung, mit einer Modellbasis, mit einer Aufnahmekavität in der Modellbasis und mit einem herausnehmbaren Zahnstumpf erzeugt werden.

Wie bereits vorhergehend erläutert, weist der Zahnstumpf einen Präparationsabschnitt und einen Schaft auf, wobei der Präparationsabschnitt zur prothetischen Rekonstruktion und der Schaft zum Einsetzen entlang einer Einschubrichtung in die Aufnahmekavität in der Modellbasis vorgesehen ist. Zwischen dem Schaft und des Präparationsabschnitts kann auch eine sogenannte "Hohlkehle" vorgesehen sein, um die Präparationsgrenze gegenüber dem Schaft hervorzuheben.

Der Schaft ist zudem in der Aufnahmekavität mit der Modellbasis funktional wirksam verbindbar und lösbar angeordnet. Vorzugsweise ist der Schaft im eingesetzten Zustand in der Modellbasis, in einer sogenannten "Sollposition" angeordnet und insbesondere funktional wirksam formschlüssig verbindbar bzw. verbunden und auch wieder lösbar.

Hierzu weist die Modellbasis und/oder der Schaft ein Positionierungselement auf. Das Positionierungselement der Modellbasis greift in der "Sollposition" z.B. in eine hierfür vorgesehene Nut am Schaft ein, wodurch sich eine formschlüssige Verbindung ergibt und der Zahnstumpf, insbesondere der Schaft gegen ein ungewolltes axiales Verschieben fixiert ist. Die Nut weist hierzu eine vorbestimmte Tiefe und Breite auf.

Das Positionierungselement kann allgemein einen Vorsprung aufweisen, wobei der Vorsprung ebenso eine vorbestimmte Tiefe und Breite aufweist, sodass der Vorsprung in die besagte optionale Nut eingreifen bzw. eingeschoben werden kann. In einem weiteren Beispiel ist der Vorsprung hierzu radial von der Wandung der Modellbasis in die Aufnahmekavität gerichtet. Alternativ kann der Vorsprung auch von der Mantelfläche des Zahnstumpfs abstehend zur Wandung der Modellbasis hin ausgerichtet angeordnet sein.

Beispielsweise umfasst das elastische Positionierungselement der Modellbasis einen Positionierungsarm und/oder das elastische Positionierungselement des Schafts umfasst einen Schaftfortsatz. Beide Arten von Positionierungselementen können in gleicher oder unterschiedlicher Weise für einer Fixierung und/oder selbständige relative Positionierung von Modellbasis und Schaft sorgen. Wie weiter unten noch beschrieben wird, könnte ein Vorteil des elastischen Positionierungsarms darin liegen, dass er aufgrund z.B. einer Rundung des Positionierungsarms und/oder dessen Angriffspunktes (z.B. an einer "Eingriffsvertiefung" oder eines Vorsprungs) am Schaft, an welchem der Positionierungsarm anliegt, in der Lage ist, den Schaft und damit den Zahnstumpf in eine gewünschte Sollposition zu bewegen, insbesondere zu rotieren und optional in dieser Position zu verrasten. Die Rotation resultiert z.B. daraus, dass der Positionierungsarm gegen den Schaft vorgespannt ist und daher am Angriffspunkt gegen den Schaft drückt, wobei aufgrund der besagten Rundungen der Positionierungsarm und der Schaft gegeneinander "abrollen".

Ein Vorteil des Schaftfortsatzes könnte darin liegen, dass er z.B. über einen am Schaftfortsatz ausgebildeten und an einer gegenstückige Mulde der Modellbasis angreifenden Vorsprung in der Lage ist, den Schaft und damit den Zahnstumpf in eine gewünschte Position zu bewegen und optional in dieser Position zu verrasten. Die Bewegung umfasst hierbei insbesondere eine translatorische Bewegung in und entgegen der Einschubrichtung, um eine gewünschte relative Positionierung von Modellbasis und Zahnstumpf zu bewirken. Vorzugsweise ist hierbei der Vorsprung rampenartig ausgebildet und umfasst eine schräge Rampenfläche, welche sich aufgrund der Elastizität und der Federkraft des gegenüber der Modellbasis vorgespannten Schaftfortsatzes an einem entsprechenden Angriffspunkt gegen den Rand der Mulde pressen kann und dadurch in Richtung der Achse des Zahnstumpfes dessen Positionierung relativ zur Modellbasis festlegen kann. Die Translation resultiert also z.B. daraus, dass der Schaftfortsatz gegen die Modellbasis (insbesondere gegen den Rand der Mulde) vorgespannt ist und daher am Angriffspunkt gegen die Modellbasis drückt, wobei aufgrund der besagten Schräge der Rampenfläche die Modellbasis und der Schaft gegeneinander verschoben werden. Im Ergebnis resultiert in der daraufhin eingenommen Sollposition des Schaftes eine formschlüssige und aufgrund der Elastizität lösbare Verbindung zwischen Schaftfortsatz und Modellbasis.

Es sei angemerkt, dass unter einer Mulde allgemein ein Rücksprung der Durchgangsöffnung der Modellbasis verstanden wird.

Allgemein ist z.B. vorgesehen, dass ferner der Schaft oder die Modellbasis einen Vorsprung aufweisen, wobei der Schaft im in der Modellbasis aufgenommenen Zustand eine Sollposition einnimmt, wobei der Vorsprung dazu ausgebildet ist, den Schaft und die Modellbasis (2) zueinander zur Einnahme der Sollposition auszurichten. Über den Vorsprung erfolgt also eine Art "Selbstzentrierung" des Schafts gegenüber der Modellbasis, um eine gewünschte Ausrichtung von Modellbasis und Schaft in der Sollposition zu bewirken.

Das Dentalmodell kann eine zum Vorsprung gegenstückige Eingriffsvertiefung aufweisen, wobei die Eingriffsvertiefung und der Vorsprung dazu ausgebildet sind, den Schaft und die Modellbasis zueinander, insbesondere aufgrund durch die Elastizität des Positionierungselements wirkenden Kräfte zur Einnahme der Sollposition auszurichten, wobei der Positionierungsarm und der Schaft die gegenstückige Kombination der Eingriffsvertiefung und des Vorsprungs aufweisen und/oder der Schaftfortsatz und die Modellbasis die gegenstückige Kombination der Eingriffsvertiefung und des Vorsprungs aufweisen, wobei insbesondere die Rastverbindung durch die gegenstückige Kombination der Eingriffsvertiefung und des Vorsprungs gegeben ist.

Beispielsweise weist die Modellbasis eine die Aufnahmekavität begrenzende Wandung auf, wobei der Schaftfortsatz und die Wandung die gegenstückige Kombination der Eingriffsvertiefung und des Vorsprungs aufweisen.

Die Eingriffsvertiefung kann ferner einen maximalen Tiefbereich, insbesondere Tiefpunkt, aufweisen, wobei die Sollposition durch einen Eingriff des Vorsprungs in den maximalen Tiefbereich definiert ist, wobei insbesondere die Form der Eingriffsvertiefung durch eine Rundung, Kegelstumpfform, Pyramidenform oder V-Form gegeben ist. Dies könnte den Vorteil haben, dass der Vorsprung, unterstützt durch die aus der Elastizität des Positionierungselements wirkenden Federkräfte in der Eingriffsvertiefung hin zum maximalen Tiefbereich gleitet und somit Schaft und Modellbasis zueinander ausgerichtet werden.

In einem praktischen Beispiel umfasst das Positionierungselement der Modellbasis einen Positionierungsarm und/oder das Positionierungselement des Schafts einen Schaftfortsatz. Der Positionierungsarm ist elastisch gegenüber dem Schaft vorgespannt und der Schaftfortsatz ist gegenüber der Modellbasis elastisch vorgespannt. Im Folgenden sei ohne Beschränkung der Allgemeinheit davon ausgegangen, dass der Positionierungsarm und der Schaftfortsatz jeweils einen Vorsprung aufweisen und dass der Schaft und die Modellbasis jeweils eine hierzu gegenstückige gerundete Eingriffsvertiefung aufweisen. Aufgrund der wirkenden Federkraft wird beim Eingriff des jeweiligen Vorsprungs in die jeweilige Eingriffsvertiefung der Vorsprung entlang der Wandung der Vertiefung so weit rutschen, bis sie den Grund der Vertiefung, also den maximalen Tiefbereich erreicht hat. Durch dieses Rutschen findet eine relative Positionsveränderung von Schaft und Modellbasis statt. Allgemein kann diese relative Positionsveränderung eine Rotation um die durch die Einschubrichtung definierte Achse oder eine Translation in oder entgegen der durch die Einschubrichtung definierten Achse umfassen.

Die Verteilung der Positionierungsarme über den Umfang des Schafts und/oder der Wandung kann in Abhängigkeit eines Zahnschemas definiert werden. Vorzugsweise ist dies auch an die Verteilung der axial verlaufenden Nuten gekoppelt. Somit passt ein Zahnstumpf vorzugsweise immer nur in die durch das Zahnschema definierte Aufnahmekavität. Ferner ist es vorstellbar, dass die Vorsprünge, insbesondere die Positionierungsarme, ungleichmäßig über den Umfang des Schafts und/oder der Wandung der Modellbasis verteilt sind.

Der Präparationsabschnitt soll vollständig sichtbar sein, insbesondere ist auch die Präparationsgrenze in der Sollposition vollständig sichtbar. Hierzu ist in der Aufnahmekavität z.B. eine vorbestimmte Einsetztiefe für den Schaft in der Sollposition definiert bzw. vorgesehen.

Der Schaft weist ferner zumindest einen Schaftfortsatz auf. Z.B. weisen der Positionierungsarm und der Schaftfortsatz jeweils einen Vorsprung auf, wobei der Vorsprung eine Rastnase und/oder ein Reibelement aufweist oder ausbildet. Im obig diskutierten Beispiel könnte der Schaftfortsatz die Rampenform aufweisen.

Optional ist es vorgesehen, dass der Schaft in axialer Richtung geteilt ausgeführt ist und somit zumindest zwei, insbesondere drei Schaftfortsätze ausbildet. Der Schaft kann auch vier oder mehr Schaftfortsätze aufweisen.

Die Modellbasis weist z.B. eine die Aufnahmekavität begrenzende Wandung auf, wobei der Positionierungsarm zumindest einen Teil der Wandung ausbildet. Aufgrund der Elastizität des Positionierungsarms ist auch ein Teil der Wandung der Modellbasis elastisch, insbesondere federelastisch. Hierdurch wird könnten herstellungs- oder verschleißbedingte Toleranzen ausgeglichen werden, was nachfolgend noch näher erläutert werden wird.

Optional ist vorgesehen, dass zwischen den Schaftfortsätzen und den Positionierungsarmen jeweils ein Spalt vorgesehen ist. Zudem ist es möglich, dass die Schaftfortsätze eine gemeinsame Ausnehmung umschließen, um beim Einschieben in die Aufnahmekavität ausreichend Raum zur Verfügung zu haben, um eine Durchmesserdifferenz zwischen der Aufnahmekavität der Schaftfortsätze mittels elastischer Verformung auszugleichen.

Das Positionierungselement und der Schaftfortsatz erstrecken sich vorzugsweise in axialer Richtung, insbesondere parallel zur Einschubrichtung. In einer alternativen Ausgestaltung erstrecken sich zwei oder mehr der Positionierungsarme und/oder zwei oder mehr der Schaftfortsätze in axialer Richtung, wobei jeweils zwei Positionierungsarme einen Zwischenraum ausbilden und ein Schaftfortsatz in diesen Zwischenraum eingreift. Insbesondere wird dieser Zwischenraum parallel zur Einschubrichtung bzw. der Einschubachse ausgebildet, wodurch eine Führung während des Einschiebens des Schafts in die Modellbasis hergestellt ist.

Es ist vorgesehen, dass der Schaft zumindest einen Schaftfortsatz aufweist und optional der Positionierungsarm und der Schaftfortsatz jeweils einen Vorsprung aufweisen, wobei der Vorsprung eine Rastnase und/oder ein Reibelement aufweist oder hierdurch gebildet wird. Durch den Positionierungsarm, insbesondere durch die zugehörige Rastnase, könnte der Zahnstumpf mit der Modellbasis des Dentalmodells, insbesondere in der zugehörigen Aufnahmekavität funktional wirksam verbindbar sein, insbesondere axial fixierbar bzw. in der Sollposition axial fixierbar sein.

Hierzu weist der Schaft z.B. eine Eingriffsvertiefung bzw. Nut zum Eingreifen des Positionierungsarms der Modellbasis auf. In einer besonderen Weiterbildung kann die Rastnase auch als Reibelement ausgebildet sein und sowohl die Funktion einer Rastnase und/oder eines Reibelements erfüllen. Der Zahnstumpf ist hierdurch gegen ein unbeabsichtigtes Lösen aus der Modellbasis gesichert, insbesondere auch gegen ein Verdrehen. Durch den Schaftfortsatz bzw. die Schaftfortsätze und den daran vorgesehenen Vorsprung oder auch Vorsprüngen welche eine Rastnase und/oder ein Reibelement aufweisen oder ausbilden, kann zudem der Zahnstumpf über den Schaft in seiner Position ausgerichtet werden.

Insbesondere wird der Zahnstumpf entlang der Einschubrichtung bzw. einer korrespondierenden Einschubachse hin ausgerichtet, sodass die Präparationsgrenze in der Sollposition, zum einen vollständig sichtbar ist, und zum anderen auch die Ausrichtung horizontal und vertikal der patientenindividuellen Situation entspricht.

Die Einschubachse ist vorzugsweise mit der Symmetrieachse bzw. Mittelachse des Schafts kongruent. Hilfreich ist hierbei auch, wenn der Schaft und/oder der Schaftfortsatz eine Oberfläche mit einer senkrecht zur Einschubrichtung bzw. Einschubachse hin ausgerichteten Flächennormalen aufweist. Vorteilhaft für die Passung des Positionierungselements ist es auch, wenn die Oberfläche des Positionierungselements teilweise konvex ausgebildet ist. Alternativ oder zusätzlich kann die Oberfläche des Schafts und/oder des Schaftfortsatzes auch teilweise konkav ausgebildet sein. Der konkave bzw. konvexe Oberflächenverlauf ist hierbei in einer Ebene zu sehen, in welcher die Einschubrichtung bzw. Einschubachse verläuft.

Durch den besagten Oberflächenverlauf könnte sich der Vorteil ergeben, dass der Schaft in komfortabler Weise in die Aufnahmekavität eingesetzt werden kann. Aufgrund der Elastizität und dem Oberflächenverlauf wird beim Einschieben z.B. das Positionierungselement automatisch in eine Position gebogen und somit vorgespannt, was es ermöglicht, das Einschieben insbesondere leichtgängig durchzuführen. Nach erreichen der Sollposition findet z.B. ein selbständiges Verrasten oder ein reibendes Haften des Positionierungselements aufgrund der durch die Vorspannung wirkenden Federkräfte statt, sodass daraufhin Schaft und Modellbasis miteinander formschlüssig verbunden (verrastet) oder kraftschlüssig verbunden sind. Unabhängig vom Verrasten oder Haften kann nach Erreichen der maximalen Einschubposition aufgrund der durch die Vorspannung wirkenden Federkräfte ein selbständiges Positionieren des Zahnstumpfes relativ zur Modellbasis stattfinden.

Z.B. weist die Modellbasis eine Mehrzahl, insbesondere drei der Positionierungsarme und der Schaft eine Mehrzahl, insbesondere drei der Schaftfortsätze auf. In dieser Variante bilden z.B. jeweils zwei Positionierungsarme einen in axialer Richtung, sich insbesondere parallel zur Einschubrichtung bzw. der Einschubachse, erstreckenden Zwischenraum aus, wobei der Zwischenraum zum Einschieben für einen der Schaftfortsätze vorgesehen ist. Auch die Maßnahme, dass der Schaft entlang der Einschubrichtung bzw. der Einschubachse in die Aufnahmekavität, einschiebbar ist, wobei der Zwischenraum für einen Schaftfortsatz eine Art Führung ausbildet, könnte zu einer Verbesserung der Genauigkeit der Ausrichtung des Schafts in der Modellbasis bzw. in der Aufnahmekavität beitragen.

Für einen sicheren Halt des Schafts in der Modellbasis bzw. der Aufnahmekavität weist der Schaft optional zumindest eine Eingriffsvertiefung für den Positionierungsarm auf, insbesondere für den Vorsprung des Positionierungsarms.

Z.B. durchdringt die Aufnahmekavität die Modellbasis und weist hierzu am oberen Ende eine Einschiebeöffnung und am unteren Ende eine Durchgangsöffnung auf. Möglich ist ferner, dass der Schaft in der Modellbasis im aufgenommenen (eingesetzten bzw. eingeschobenen) Zustand eine Sollposition einnimmt, wobei z.B. ein Vorsprung eines Schaftfortsatzes an einem Teil der Wandung bzw. an einem Teil des Wandungsbereichs der Aufnahmekavität anliegt.

Vorteilhaft ist es auch, wenn die Modellbasis im Bereich der Durchgangsöffnung eine Mulde aufweist, wobei der Schaftfortsatz sich durch die Durchgangsöffnung zumindest teilweise in die Mulde erstreckt. Die Mulde kann in Form und Größe einem Finger, insbesondere eines Teils des Daumens nachempfunden sein. Durch einen gezielten leichten Druck auf den Schaftfortsatz und optionalem daraus resultierenden Wegdrängen des Vorsprungs vom Rand der Mulde könnte sich der Schaft aus der Sollposition in der Aufnahmekavität herausbewegen lassen und anschließend sehr einfach aus der Modellbasis herausgenommen werden, ohne eine Zugkraft an den Präparationsabschnitt bzw. an die Präparation anlegen zu müssen. Der besagte Druck auf den Schaftfortsatz könnte dafür sorgen, dass im Fall der obig diskutierten Rampe diese Rampe am Angriffspunkt (Rand) der Mulde entlanggleitet und dadurch aufgrund der Elastizität der Schaftfortsatz so verbogen wird, dass er schließlich mitsamt dem Vorsprung in die Aufnahmekavität rutschen kann.

Insbesondere sind der Schaftfortsatz und der Positionierungsarm federelastisch verformbar. Hierdurch könnten aufgrund der hieraus resultierenden selbständigen relativen Positionierung von Zahnstumpf und Modellbasis herstellungsbedingte und/oder verschleißbedingte und/oder auch toleranzbedingte Formabweichungen des Dentalmodells, insbesondere des Schafts und/oder der Modellbasis bzw. der Aufnahmekavität ausgeglichen werden.

Optional ist vorgesehen, dass der lichte Durchmesser der Aufnahmekavität zumindest teilweise etwas kleiner ausgeführt ist, als der Durchmesser des Schafts, wodurch beim Einschieben des Schafts in die Aufnahmekavität bis zum Erreichen der Sollposition des Zahnstumpfs bzw. des Schafts, das jeweilige elastische Element, ob am Schaft und / oder an der Modellbasis positioniert, elastisch verformt wird. Dies kann z.B. mit der obig diskutierten konkaven bzw. konvexen Formgebung kombiniert werden. In der Variante mit mehreren Schaftfortsätzen, in der Funktion als elastische Elemente, sind die Schaftfortsätze z.B. derart ausgerichtet, dass sich die Richtung der Vektoren der jeweils resultierenden Rückfederkraft eines elastischen Elements, mit den anderen Vektoren der resultierenden Rückfederkräften in einem Flächenschwerpunkt des Schafts schneiden. Somit könnte ein Momentengleichgewicht in der optimalen Ausrichtung des Schafts sichergestellt werden.

In einer alternativen Ausführung des Schafts kann es durchaus beabsichtigt sein, dass die Symmetrieachse des Schafts nicht deckungsgleich mit der Einschubachse ist. Allerdings sollte dies bei der Sollposition der Präparationsgrenze dementsprechend berücksichtigt werden.

Die optimale Ausrichtung des Schafts sollte sich in allen Varianten vorzugsweise selbsttätig aufgrund der funktional wirksamen Federkräfte am Schaft bzw. der Modellbasis herstellen. Somit könnte auch vorteilhafterweise ein Materialverlust des Schafts und/oder der Modellbasis, aufgrund von Verschleiß tolerierbar sein und die optimale Ausrichtung des Schafts beibehalten werden.

Optional ist vorgesehen, dass der Schaft einen Absatz aufweist, wobei der Absatz als eine Art Anschlag vorgesehen ist und hierdurch in axialer Richtung, insbesondere entlang der Einschubachse, die Tiefe der Sollposition des Schafts in der Aufnahmekavität definiert. In einer speziellen Ausführung, kann der Absatz eine Mehrzahl von Absatzsegmenten aufweisen, wobei die Absatzsegmente eine unterschiedliche Ausdehnung in axialer Richtung aufweisen. Hierdurch könnte sichergestellt werden, dass der Zahnstumpf in der vorgesehenen Ausrichtung in die Aufnahmekavität eingeschoben bzw. positioniert wird, da ansonsten der Zahnstumpf seine Sollposition nicht einnehmen kann.

Z.B. stehen die Absatzsegmente flügelartig in radialer Richtung nach außen von dem Schaft ab, wobei die geometrische Form der Einschiebeöffnung der Modelbasis an die flügelartig ausgebildeten Absatzsegmente angepasst ist und eine formschlüssige Verdrehsicherung ausbildet. Ferner kann an dem Schaft, insbesondere an einem Absatzsegment des Schafts, ein Einschubindikator vorgesehen sein. Hierdurch könnte sich bereits vor dem Einschieben des Schafts in die Aufnahmekavität erkennen lassen, ob der Zahnstumpf auch die richtige Ausrichtung aufweist.

Das Dentalmodell ist derart ausgestaltet, dass der Schaft mit der Modellbasis verrastbar ist. Insbesondere könnte durch den Einschubindikator von außen sichtbar sein, dass der Zahnstumpf und die Modellbasis hierbei korrekt zueinander ausgerichtet sind. Ein unsachgemäßes, insbesondere ein verdrehtes Zusammenfügen ist vorzugsweise deshalb nicht möglich, da die unterschiedlich ausgebildeten Absatzsegmente dies verhindern.

Ist der Zahnstumpf technisch notwendig vollständig in die Aufnahmekavität eingeführt, ist die Rastnase vorzugsweise von außen nicht mehr sichtbar. Es ist aber z.B. taktil spürbar und/oder hörbar, wenn der Eingriff eines Positionierungselements in einer Nut im Schaft des Zahnstumpfs erfolgt.

Das Dentalmodell kann ein Blockierelement umfassen, wobei das Blockierelement dazu ausgebildet ist, ein Lösen der formschlüssig lösbaren Verbindung des Schaftfortsatzes zu blockieren. Dies könnte den Vorteil haben, dass Modellbasis und Zahnstumpf sicher miteinander verbunden bleiben und sich z.B. aufgrund einer Handhabung des Modellbasis der Zahnstumpf nicht unbeabsichtigt selbständig von der Modellbasis lösen kann.

Beispielsweise weist das Blockierelement einen Fuß auf, wobei der Fuß dazu ausgebildet ist, mit dem Schaftfortsatz in einen formschlüssigen Kontakt gebracht zu werden, wobei aufgrund des Kontakts das Lösen der formschlüssig lösbaren Verbindung blockiert wird.

So kann die Modellbasis eine Mehrzahl der Schaftfortsätze aufweisen, wobei der Schaft dazu ausgebildet, das Blockierelement in dem zwischen den mehreren Schaftfortsätzen gebildeten Hohlraum aufzunehmen, wobei im in dem Hohlraum aufgenommenen Zustand des Fußes der formschlüssige Kontakt gegeben ist. Z.B. wird der Hohlraum dadurch gebildet, dass die Schaftfortsätze einen sich entlang der Einschubrichtung erstreckenden Hohlraum umgeben.

Allgemein kann sich der Hohlraum sowohl in axialer Richtung (Einsetzrichtung) des Schaftes erstrecken, als auch in dazu senkrechter horizontaler Richtung. Das Blockierelement kann in der von unten offenen Modellbasis von unten zwischen die Schaftfortsätze eingebracht werden oder es kann seitlich z.B. durch eine entsprechende Öffnung der Modellbasis zwischen die Schaftfortsätze eingebracht werden. Es sei angemerkt, dass die beschriebenen Möglichkeiten des Einbringens des Blockierelements auch dann Anwendung finden können, wenn nur ein einzelner Schaftfortsatz zum Einsatz kommt. In diesem Fall kann das Blockierelement ebenfalls von unten oder von der Seite so mit dem Schaftfortsatz formschlüssig in Kontakt gebracht werden, dass ein Lösen der formschlüssigen Verbindung blockiert wird.

In einem weiteren Beispiel weist das Blockierelement einen Kopf auf, wobei der Fuß am Kopf angeordnet ist und der Kopf den Fuß seitlich (z.B. in einer Ebene senkrecht zur Einsetzrichtung, z.B. T-förmig) überragt, wobei die Mulde dazu ausgebildet ist, den Kopf aufzunehmen. Das Vorsehen eines Kopfes könnte den Vorteil haben, dass damit der Zahnstumpf von unten gegen z.B. Eindringen von Fremdkörpern oder Flüssigkeiten abgedichtet werden kann.

Im Falle des Vorhandenseins eines Fußes kann der Schaft dazu ausgebildet sein, den Fuß in dem zwischen den Schaftfortsätzen gebildeten Hohlraum aufzunehmen.

In einer weiteren Ausgestaltung kann das Dentalmodel auch ein Koppelelement aufweisen. Das Koppelelement bildet bzw. umfasst ebenso wie die Modellbasis eine zugehörige Aufnahmekavität für einen herausnehmbaren Zahnstumpf, wobei der Zahnstumpf einen Präparationsabschnitt und einen Schaft aufweist. Der Präparationsabschnitt ist zur prothetischen Rekonstruktion eines Zahns, und der Schaft zum Einsetzen entlang einer Einschubrichtung in die Aufnahmekavität in dem Koppelelement vorgesehen, wobei der Schaft in der Aufnahmekavität mit dem Koppelelement lösbar funktional wirksam verbindbar bzw. verbunden ist. Hierzu weist das Koppelelement zumindest ein Positionierungselement z.B. mit einem Vorsatz mit einer Rastnase und/oder einem Reibelement auf.

Ebenso wie die Modellbasis bildet das Koppelelement z.B. eine die Aufnahmekavität begrenzende Wandung aus, wobei der Positionierungsarm zumindest einen Teil der Wandung des Koppelelements bildet. Die äußere Formgebung des Koppelelements ist nicht an die der Modellbasis gebunden und kann als geometrischer Körper mit kreisrunder, elliptischer, oder eckiger Grundfläche ausgebildet sein.

Das Koppelelement kann beispielsweise zur sicheren Aufbewahrung eines herausnehmbaren Zahnstumpfs benutzt werden, sowie auch die Handhabung des Zahnstumpfs während der Präparation verbessern. Zum Beispiel lässt sich der Zahnstumpf mit dem Koppelelement einfach und genau in einer Spannvorrichtung fixieren.

Die Herstellung eines Dentalmodels gestallt sich z.B. wie folgt: Die Patientensituation wird mit einem bildgebenden Verfahren, vorzugsweise digital mit einem geeigneten Intraoral-Scanner abgelichtet bzw. oder auf eine alternative bildgebende Art erfasst. Unter einem bildgebenden Verfahren werden auch physikalische Erfassungsmethoden verstanden wie beispielsweise die Sonographie, die Erfassung mittels Magnetresonanztomographie, mittels Computertomographie oder mittels digitaler Volumentomographie. Es ist auch ein Scan eines Gipsabdrucks und/oder Gipsmodels der Patientensituation anwendbar.

Die erfasste Patientensituation wird zunächst in digitale Daten bzw. einem Datensatz umgesetzt und in bzw. auf einem geeigneten Medium gespeichert. Auf Grundlage dieser digitalen Daten wird eine dreidimensionale Darstellung eines virtuellen Dentalmodells für eine zahntechnische Modellierung generiert. Die jeweilige virtuelle Aufnahmekavität wird in der virtuellen Modellbasis des virtuellen Dentalmodells für den jeweiligen virtuellen Zahnstumpf festgelegt und ein weiterer modifizierter Datensatz auf Grundlage der erfolgten Festlegung generiert.

Dieser modifizierte Datensatz wird anschließend zur Herstellung eines physischen Dentalmodells verwendet, wobei der Zahnstumpf dem virtuellen Zahnstumpf zugehörig ist. Das physische Dentalmodell wird bzw. kann vorzugsweise im Wege eines additiven Herstellungsverfahrens umgesetzt werden.

Die Herstellung eines erfindungsgemäßen Dentalmodells gestaltet sich z.B. wie folgt: Die Herstellung des physischen Dentalmodells erfolgt vorzugsweise mit einem generativen Fertigungsverfahren bzw. additiven Fertigungsverfahren, insbesondere 3D-Druck. Ferner werden unter generativen Fertigungsverfahren hier folgende Verfahren beispielhaft genannt: Stereolithografie (SL), Laser-Sintern (LS), Laser-Strahlschmelzen (Laser Beam Melting = LBM), Elektronen-Strahlschmelzen (Electron Beam Melting = EBM), Fused Layer Modelling/Manufacturing (FLM oder auch Fused Filament Fabrication (FFF)), Multi-Jet Modelling (MJM), Poly-Jet Modelling (PJM), 3-D-Drucken (3DP, auch Binder Jetting), Layer Laminated Manufacturing (LLM), Digital Light Processing (DLP), Thermotransfer-Sintern (TTS), Metal Laminated Tooling (MELATO), Continuous Liquid Interface Production (CLIP), Selective Heat Sintering (SHS), Auftragschweißen bzw. Cladding, Wax Deposition Modeling (WDM), Contour Crafting, Liquid Composite Moulding (LCM).

Möglich ist, dass das Dentalmodell vereinzelt hergestellt wird. Die Modellbasis kann auch getrennt von dem Zahnstumpf hergestellt werden. Anschließend kann der Zahnstumpf in die Modellbasis eingesetzt werden. Die Modellbasis kann mit der oder den darin vorgesehenen Aufnahmekavitäten wahlweise in einem anderen Material als ein zugehöriger Zahnstumpf hergestellt werden. Beispielhaft können hierzu Polymere wie Polylactide, Polyhydroxyfettsäuren, Acrylnitril-Butadien- Styrol-Copolymer, Thermoplastisches Polyurethan (TPU), Epoxidharze, gemischt oder kombiniert werden.

Ausführungsformen der Erfindung könnten allgemein den Vorteil haben, einem Verdrehen des Schafts in der Aufnahmekavität entgegenzuwirken. Grundsätzlich kann die Aufnahmekavität als Alternative zu einer grundsätzlich runden Ausgestaltung, auch rechteckig ausgeführt sein. Durch das häufige Reponieren des Zahnstumpfs kann allerdings ein für das Auge nicht feststellbarer Abrieb an den sogenannten Reibungspunkten auftreten. Hierdurch werden die Abmaße des bereits zuvor toleranzbehafteten Dentalmodells, insbesondere die Stützelemente und deren Reibungspunkte betreffend, zusätzlich negativ beeinflusst.

Durch das Zusammenwirken des Schaftes des Zahnstumpfes und der Aufnahmekavität bzw. des Koppelelements könnte aufgrund des zusätzlich vorhandenen Positionierungselements gewährleistet werden, dass der Zahnstumpf selbständig und kontinuierlich in die richtige Position gebracht wird. Falls diese Position verloren geht, könnten in diesem Fall die Federkräfte bewirken, dass der Zahnstumpf zurück in die gewünschte Position bewegt wird.

Dies gilt auch für den Fall, dass aus einer wiederholten Verwendung des Zahnstumpfes eine Abreibung der Flächen und dadurch Toleranzen entstehen können.

Vorzugsweise würde sogar, wenn die Kontaktflächen zwischen Schaft und Aufnahmekavität (bzw. Koppelelement) abgerieben sind und nicht mehr exakt auf einander abgestimmt sind, der Zahnstumpf durch die Federkräfte und spezielle Ausbildung in die richtigen Position zurückgebracht.

Z.B. ist die durch den Positionierungsarm gebildete Wandung der Aufnahmekavität gerundet. Drückt diese nun aufgrund ihrer Federkraft auf die entsprechende Aussparung im Zahnstumpf, könnte dies zu einer entsprechenden automatischen rotatorischen Ausrichtung des Zahnstumpfes relativ zur Aufnahmekavität führen. Die Aussparung im Zahnstumpf ist vorzugsweise ebenfalls passend (gegenstückig) gerundet konzipiert, so dass die Federkraft und das runde Konzept dafür sorgen, dass der Zahnstumpf immer in seine gewünschte SollPosition zurückgebracht/korrigiert wird. Möglich ist allgemein, dass entweder die durch den Positionierungsarm gebildete Wandung der Aufnahmekavität gerundet ausgebildet ist und/oder dass der hierzu gegenstückige Teil, z.B. die Eingriffsvertiefung des Schafts, gerundet ausgebildet ist.

Selbst im Fall von Verschleiß könnte somit eine exakte Führung und Fixierung eines Zahnstumpfs bzw. des zugehörigen Schafts, speziell an den Reibungspunkten, bei einer unzulässigen Toleranzabweichung und/oder Verschleiß der Stützelemente, möglich sein. Eine genaue Passung, um einen z.B. Reibschluss herzustellen, wäre somit gewährleistet und damit einhergehend auch eine Beurteilung der prothetischen Rekonstruktion des Präparationsabschnitts zuverlässig möglich.

Selbst wenn die Abmaße des Dentalmodells auch bei allen bekannten generischen, insbesondere 3D-Druck-Verfahren durch die notwendige Energiezufuhr während der Herstellung signifikant beeinflusst würden, sodass auch eine herstellungstechnische Toleranzabweichung durch Schrumpf und/oder durch Verzug entsteht, könnte dem Rechnung getragen werden. Dies gilt, zumal auch die 3D-Drucker selbst zusätzlich toleranzbehaftet sind und eine unterschiedliche Herstellungsqualität liefern. So ist zum Beispiel eine Maßabweichung von ± 0,2 % für ein mit SLA (Stereolithographie) gefertigtes Dentalmodell durchaus möglich. Durch den material- und herstellungsbedingten Schrumpf und/oder Verzug nach dem Abkühlen kann die Dimensionierung und Ausrichtung der Stützelemente, insbesondere an den dort vorgesehenen Reibungspunkten, sehr ungenau sein.

Die Genauigkeitsanforderungen für einen Zahnersatz, und dementsprechend auch für die Fertigung des Zahnersatzes notwendigen Dentalmodelle, sind sehr hoch, sonst wird der Zahnersatz nicht optisch ansprechend, oder passt nicht wie vorgesehen auf die Zähne, und kann hierdurch Schmerzen und/oder Infektionen verursachen. Durch das beschriebene Dentalmodell könnte eine exakte Führung und Fixierung der Zahnstümpfe realisierbar sein. Ein Verkippen und auch ein Verdrehen und oder ein axiales Verschieben könnte ausgeschlossen werden, was hilfreich ist, um die prothetische Rekonstruktion des Präparationsabschnitts im Vergleich zu den Antagonisten und/oder den approximal angrenzenden Zähnen beurteilen zu können.

Somit könnte das Dentalmodellgewährleisten, dass auch bei häufigem Reponieren eines herausnehmbaren Zahnstumpfs und mit dem damit einhergehenden Verschleiß der beteiligten Komponenten, die prothetische Rekonstruktion des Präparationsabschnitts im Vergleich zu den Antagonisten und/oder den approximal angrenzenden Zähnen beurteilbar ist und der Toleranzbereich der unterschiedlichen generischen Herstellungsverfahren, insbesondere des 3D-Druckverfahren berücksichtigt wird.

Im Folgenden soll nun, neben dem Stand der Technik, auch zumindest ein Ausführungsbeispiel der Erfindung anhand der nachfolgenden Zeichnung und der zugehörenden Beschreibung näher erläutert werden.

### KURZBESCHREIBUNG DER FIGUREN

In der Zeichnung zeigt:
Fig. leine perspektivische Darstellung eines Dentalmodells mit einem herausnehmbaren Zahnstumpf aus dem Stand der Technik,
Fig. 2 ein Dentalmodell für eine zahntechnische Modellierung in einer perspektivischen Darstellung,
Fig. 3 in einer schematischen dreidimensionalen Darstellung einen Zahnstumpf für das Dentalmodell aus Fig. 2,
Fig. 4a, Fig. 4b jeweils schematisch, eine geschnittene Darstellung eines Schafts innerhalb der Aufnahmekavität in der sogenannten Sollposition in der Modellbasis,
Fig. 5 in einer weiteren schematischen Darstellung, einen Schnitt durch die Modellbasis in einer Draufsicht, insbesondere die Aufnahmekavität und die darin angeordneten Positionierungsarme,
Fig. 6a die Schnitteben A-A aus der Fig 4a bzw. Fig. 4b durch den Schaft, insbesondere durch den Absatz, wobei der Zahnstumpf in einer neutralen Position A dargestellt ist,
Fig. 6b die Schnitteben A-A aus der Fig 4a bzw. Fig. 4b durch den Schaft, insbesondere durch den Absatz, wobei der Zahnstumpf in einer verdrehten Position B dargestellt ist,
Fig. 7 eine schematische dreidimensionale Darstellung eines Zahnstumpfs aus der Fig. 3 mit einem Koppelelement.

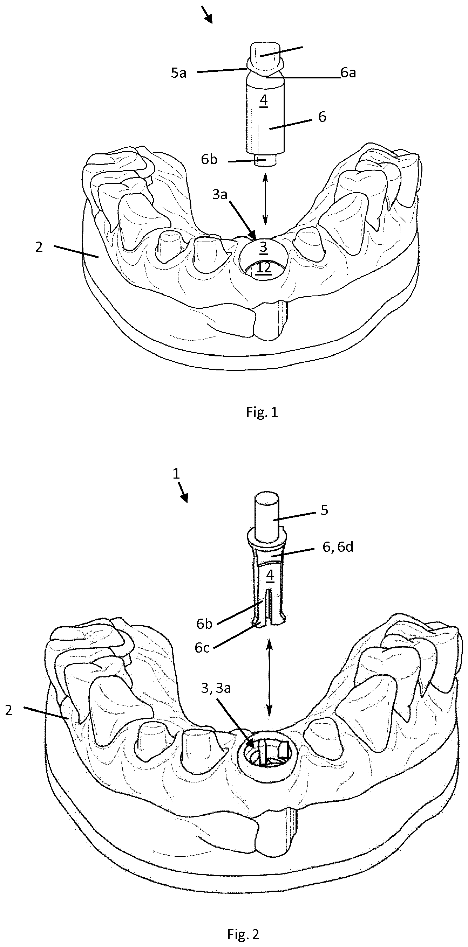

Die Fig. 1 zeigt im Wesentlichen ein Dentalmodell 1 für eine zahntechnische Modellierung in einer perspektivischen Darstellung aus dem Stand der Technik. Gut sichtbar ist die Modellbasis 2, insbesondere der Zahnkranz eines Unterkiefers mit einem von Zahnfleisch umgebenen beschliffenen sowie unbeschliffenen Restzahnbestand, wobei in der Modellbasis 2 eine Aufnahmekavität 3 vorgesehen ist. Sichtbar ist auch ein der Aufnahmekavität 3 zugeordneter und in die Aufnahmekavität 3 einsteckbarer und wieder herausnehmbarer bzw. lösbarer Zahnstumpf 4. Der Zahnstumpf 4 weist einen Präparationsabschnitt 5, welcher zur prothetischen Rekonstruktion vorgesehen ist, und einen an den Präparationsabschnitt 5 anschließenden zugehörigen Schaft 6 auf. Die Trennung des Präparationsabschnitts 5 von dem Schaft 6 erfolgt durch die sogenannten zirkulär verlaufende Präparationsgrenze 5a.

Um diese Trennung zwischen dem Präparationsabschnitt 5 und dem Schaft 6 optisch zu verstärken, wird in der Regel unterhalb der Präparationsgrenze 5a eine Hohlkehle 6a eingebracht (vgl. Fig. 1). Der Schaft 6 ist im wesentlichen zylinderförmig ausgebildet, wobei der Schaft 6 am unteren Ende einen Absatz mit einem daran anschließenden Schaftfortsatz 6b aufweist.

Es ist vorgesehen, dass der Zahnstumpf 4 zum Einsetzen entlang einer Einschubrichtung, welche durch einen Doppelpfeil dargestellt ist, in die Aufnahmekavität 3 bis zum Erreichen einer Sollposition in der Aufnahmekavität 3 eingesteckt und entgegen der Einschubrichtung wieder entnommen werden kann. Die Einschiebeöffnung 3a der Aufnahmekavität 3 ist im Wesentlichen dem Durchmesser des Schafts 6 nachempfunden ausgelegt.

Der Präparationsabschnitt 5 ragt im eingesetzten Zustand des Zahnstumpfs 4, insbesondere des Schafts 6, in der Sollposition, aus der Aufnahmekavität 3 heraus, wobei der Schaft 6 in der Aufnahmekavität 3 mit der Modellbasis 2 funktional wirksam lösbar verbunden ist bzw. funktional wirksam verbindbar bzw. funktional wirksam lösbar fixierbar ist, insbesondere reibschlüssig wirksam lösbar verbindbar ist. Ein Reibschluss kann insbesondere durch den Schaftfortsatz 6b mit der Modellbasis 2 hergestellt werden, indem der Schaftfortsatz 6b in eine dafür vorgesehene Ausnehmung (nicht sichtbar) in der Modellbasis 2 eingreift und Reibungsbereiche oder Reibungspunkte (nicht sichtbar) herstellt. Die Reibungsbereiche oder Reibungspunkte können auch am Schaft 6 selbst oder in Zusammenwirken mit bzw. an der Wandung 12 der Aufnahmekavität 3 ausgebildet sein.

Die Fig. 2 zeigt nun ein erfindungsgemäßes Dentalmodell 1 für eine zahntechnische Modellierung in einer perspektivischen Darstellung. Gut sichtbar ist die Modellbasis 2, insbesondere der Zahnkranz eines Unterkiefers mit einem von Zahnfleisch umgebenen beschliffenen sowie unbeschliffenen Restzahnbestand, wobei in der Modellbasis 2 eine Aufnahmekavität 3 mit einer Einschiebeöffnung 3a vorgesehen ist.

Sichtbar ist auch ein der Aufnahmekavität 3 zugeordneter und in die Aufnahmekavität 3 einsteckbarer und wieder herausnehmbarer bzw. lösbarer Zahnstumpf 4. Der Zahnstumpf 4 weist einen Präparationsabschnitt 5, welcher zur prothetischen Rekonstruktion vorgesehen ist und einen an den Präparationsabschnitt 5 anschließenden zugehörigen Schaft 6 auf. Der Präparationsabschnitt 5 ragt im eingesetzten Zustand des Zahnstumpfs 4, insbesondere des Schafts 6, in der Sollposition, aus der Aufnahmekavität 3 heraus, wobei der Schaft 6 in der Aufnahmekavität 3 mit der Modellbasis 2 funktional wirksam lösbar verbunden ist bzw. funktional wirksam verbindbar bzw. funktional wirksam lösbar fixierbar ist, insbesondere formschlüssig wirksam lösbar verbindbar ist.

Der Präparationsabschnitt 5 ist hier nur schematisch als zylindrischer Abschnitt angedeutet. Gut erkennbar ist auch, dass der Schaft 6 sich in z.B. drei Schaftfortsätze 6b aufteilt bzw. drei Schaftfortsätze 6b aufweist. Die Schaftfortsätze 6b erstrecken sich entlang bzw. parallel zu der Einschubrichtung (Doppelpfeil) und weisen jeweils am Ende des Schaftfortsatzes 6b und vorzugsweise dem Präparationsabschnitt 5 gegenüberliegend, einen Vorsprung 6c auf. Der Vorsprung 6c ist hier als ein Reibelement ausgebildet, kann aber auch als Rastnase ausgebildet sein. Es ist auch denkbar, dass eine Kombination aus Reibelement und Rastnase den Vorsprung 6c ausbilden oder mehrere Vorsprünge 6c an dem Schaftfortsatz 6b vorhanden sind. Zudem sichtbar ist auch eine optionale Eingriffsvertiefung 6d an dem Schaft 6.

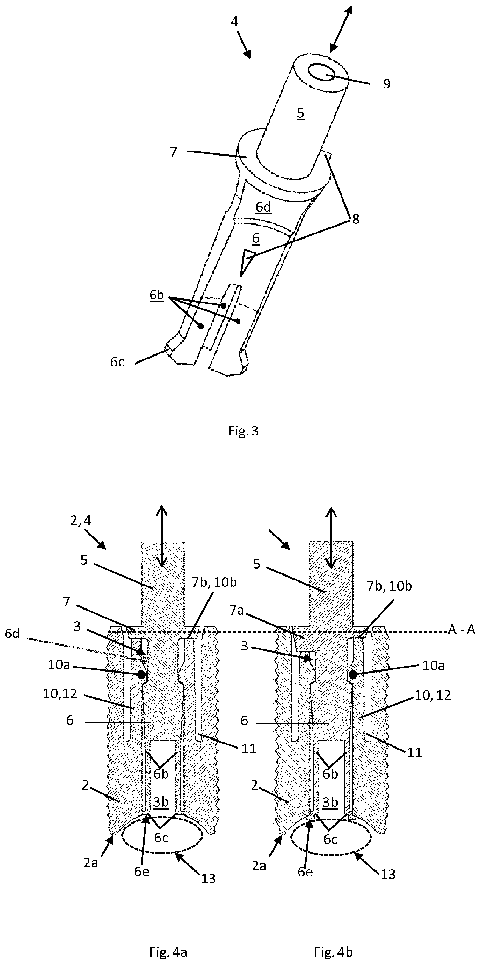

Fig. 3 zeigt nun in einer schematischen dreidimensionalen Darstellung einen Zahnstumpf 4 für das erfindungsgemäße Dentalmodell 1 aus Fig. 2. Der Zahnstumpf 4 weist, wie bereits vorhergehend beschrieben, einen Präparationsabschnitt 5 auf, welcher zur prothetischen Rekonstruktion vorgesehen ist, und einen an den Präparationsabschnitt 5 anschließenden zugehörigen Schaft 6 auf. Erkennbar ist, dass der Schaft 6 in der Fig. 3, sich in mehrere, hier drei Schaftfortsätze 6b aufteilt bzw. drei Schaftfortsätze 6b aufweist. Die Schaftfortsätze 6b erstrecken sich entlang bzw. parallel zu der Einschubrichtung (als Doppelpfeil dargestellt) und weisen jeweils am Ende dem Präparationsabschnitt 5 gegenüberliegend, einen Vorsprung 6c auf. Der Vorsprung 6c ist hier als ein Reibelement ausgebildet, kann aber auch als eine Art Rastnase ausgebildet sein.

Die Oberfläche des Schafts 6 und des Schaftfortsatzes 6b sind z.B. derart ausgebildet, dass diese jeweils zumindest eine senkrecht zur Einschubrichtung hin ausgerichtete Flächennormale bzw. einen Normalenvektor (nicht dargestellt) aufweisen. Optional ist auch, dass der Schaft 6 und der Schaftfortsatz 6b zumindest teilweise konkav ausgebildet sind. Hierdurch wird eine bessere Passung in Aufnahmekavität 3 (s. a. Fig. 2) erreicht und zudem eine resultierende Federkraft analog einer Flächennormalen bzw. einem Normalenvektor ausgerichtet.

Der Schaft 6 weist ferner z.B. eine Eingriffsvertiefung 6d auf. Der Schaftfortsatz 6b ist zudem z.B. elastisch verformbar, insbesondere federelastisch verformbar. Hierdurch könnten herstellungsbedingte und/oder verschleißbedingte und/oder auch toleranzbedingte Formabweichungen des Dentalmodells 1, insbesondere des Schafts 6 und/oder der Modellbasis 2 bzw. der Aufnahmekavität 3 ausgeglichen werden.

In der Ausführung mit mehreren Schaftfortsätzen 6b sind die Schaftfortsätze 6b und die zugehörigen Reibflächen 6c der Schaftfortsätze 6b insbesondere derart ausgerichtet, dass sich der Vektor der jeweils resultierenden Rückfederkraft, analog mit einer Flächennormalen bzw. einem Normalenvektor, mit den Vektoren der Rückfederkräfte der sonstig vorhandenen Schaftfortsätze 6b in einem Flächenschwerpunkt (nicht dargestellt) des Schafts 6 schneiden. Der Flächenschwerpunkt muss hier nicht zwingend innerhalb des Schafts 6 positioniert sein.

Der Schaft 6 weist einen optionalen Absatz 7 auf, wobei der Absatz 7 als eine Art "Anschlag" vorgesehen ist und hierdurch in axialer Richtung die Tiefe der Sollposition des Schafts 6 innerhalb der Aufnahmekavität 3 definiert. Zudem ist an dem Absatz 7 z.B. auch ein sichtbarer Einschubindikator 8 vorgesehen, welcher die vorbestimmte Ausrichtung des Schafts 6 gegenüber der Modellbasis 2 (s. a. Fig. 2) anzeigt, um den Schaft 6 in die Aufnahmekavität 3 in der vorbestimmten Ausrichtung (s. a. Fig. 2) einzuführen. Der Einschubindikator 8 kann auch am Schaft 6 als eine Art "Markierung" in Form eines Symbols vorgesehen sein. Vorzugsweise ist das Symbol sicht- und tastbar, zum Beispiel als Pfeil oder als Dreieck oder ähnlichem, in/an dem Schaft 6 ausgeführt und bereits während der Herstellung hinzugefügt worden. Ferner kann der Schaft 6, insbesondere der Präparationsabschnitt 5, mit einer Aufnahme 9 für ein Handhabungswerkzeug (nicht dargestellt) versehen sein.

Die Fig. 4a und Fig. 4b zeigen nun jeweils schematisch in einer geschnittenen Darstellung, den Zahnstumpf 4, sowie zum Teil die Modellbasis 2. Insbesondere wird in den Fig. 4a und Fig. 4b, der Zahnstumpf 4 bzw. der Schaft 6 in der Modellbasis 2, insbesondere in der zugehörigen Aufnahmekavität 3 dargestellt, wobei der Zahnstumpf 4 sich in der Sollposition befindet. Der Schaft 6 kann innerhalb der Modellbasis 2, insbesondere in der Aufnahmekavität 3, formschlüssig fixiert bzw. verrastet sein.

Gut zu erkennen ist, dass der Schaft 6 den optionalen Absatz 7 aufweist, wobei der Absatz 7 als Anschlag vorgesehen ist und hierdurch in axialer Richtung z.B. im Zusammenwirken mit einem Positionierungselement 10 des Modellbasis, die Tiefe der Sollposition des Schafts 6 in der Aufnahmekavität 4 definiert bzw. begrenzt. Der bzw. die Absätze 7 liegen in der Sollposition des Schafts 6 auf der bzw. den Stirnseiten des jeweiligen Positionierungselements 10 auf und begrenzen somit axialer Richtung die Tiefe der Sollposition des Schafts 6 in der Aufnahmekavität 4.

In der Fig. 4b ist auch schematisch dargestellt, dass der Absatz 7 unterschiedliche Ausdehnungen in axialer Richtung aufweisen kann. Hierzu kann der Absatz 7 in Absatzsegmente 7a aufgeteilt sein. Die Absatzsegmente 7a weisen unterschiedliche Ausdehnungen in axialer Richtung auf. Wie bereits vorhergehend beschrieben, liegen nun analog zum Absatz 7 die Absatzsegmente 7a in der Sollposition des Schafts 6 auf der bzw. den axialen Stirnseiten des jeweiligen Positionierungselements 10 auf. Die axiale Ausdehnung des Positionierungsarms 10 ist dementsprechend an die axiale Ausdehnung des korrespondierenden Absatzsegments 7a angepasst. Hierdurch wird sichergestellt, dass der Zahnstumpf 4, in der vorgesehenen Ausrichtung und Tiefe in der Aufnahmekavität 3 positioniert ist.

Der Absatz 7 schließt vorzugsweise mit der Modellbasis 2 in der Sollposition derart ab, sodass die Präparationsgrenze 5a (nicht dargestellt, s. hierzu auch Fig. 1) des Präparationsabschnitts 5 vollständig sichtbar und dementsprechend auch visuell beurteilbar ist. Um die Exaktheit der Sollposition zu verbessern ist es z.B. vorgesehen, dass die Stirnseite 10b des Positionierungsarms 10 sowie die korrespondierende Auflagefläche 7b des Absatzes 7 bzw. des Absatzsegments 7a mit einer Slice-Ebene (Schicht bzw. Druckeben) optimiert sind.

Vorteilhafterweise ist dementsprechend vorgesehen, dass diese optimierten Slice-Ebenen (Schichten) mit der geringst möglichen Toleranz, des zum Einsatz vorgesehenen 3D-Druckers, herzustellen sind. Dem 3D-Druck an sich geht aber ein sogenanntes "Slicing" voraus. Das Slicing ist erforderlich um das Dentalmodell 1 für die Schichtherstellung, bzw. den 3D-Druck-Prozess vorzubereiten. Das Dentalmodell 1 bzw. das virtuelle dreidimensionale Modell wird hierzu in einzelne Schichten aufgeteilt.

Der Prozess des Slicing umfasst hierzu die Freiheitsgrade, wie z. B. den Startpunkt der Schnittsequenz und die Dicke jeder Schicht. Die Wahl dieser Parameter beeinflusst den Herstellungsprozess und das Ergebnis. Die Anzahl der Schichten beeinflusst maßgeblich die für die Herstellung benötigte Zeit, während die Schichtdicke die Toleranz beeinflusst. Somit wird vorzugsweise für eine optimierte Sollposition des Zahnstumpfs 4, zum einen die Stirnseite 10b des Positionierungsarms 10 sowie die korrespondierende Auflagefläche 7b des Absatzes 7 bzw. 7a mit der geringst möglichen Schichtdicke eines 3D-Druckers hergestellt.

Ferner ist in den Fig. 4a und in der Fig. 4b der Positionierungsarm 10 als ein Teil der Wandung 12 der Modellbasis 2 in der Aufnahmekavität 3 gut erkennbar. In der Modellbasis 2 ist hierzu ein jeweils mit dem Positionierungsarm 10 korrespondierender Hinterschnitt 11 vorgesehen. Durch den Hinterschnitt 11 ist es möglich, dass sich der Positionierungsarm 10 beim Einschieben des Schafts 6 in die Aufnahmekavität 3, elastisch verformen kann. Die Dimensionierung des Hinterschnitts 11 bestimmt hierbei die maximale Auslenkung des Positionierungsarms 10. Wie bereits beschrieben ist der Positionierungsarm 10 hierzu elastisch verformbar.

In der Sollposition, wie in der Fig. 4a und der Fig. 4b dargestellt, rastet z.B. der Vorsprung 10a des Positionierungsarms 10 in die Eingriffsvertiefung 6d des Schafts 6 ein. Hierdurch können herstellungsbedingte und/oder verschleißbedingte und/oder auch toleranzbedingte Formabweichungen des Dentalmodells 1, insbesondere des Schafts 6 und/oder der Modellbasis 2 bzw. der Aufnahmekavität 3 ausgeglichen werden. In der Ausführung mit mehreren Positionierungsarmen 10, sind die Positionierungsarme 10 und die zugehörigen Eingriffsvertiefungen 6d des Schafts 6 derart ausgerichtet, dass sich die Richtung der Vektoren der jeweils resultierenden Rückfederkraft, mit den Vektoren der resultierenden Rückfederkräfte der sonstig vorhandenen Positionierungsarme 10 in einem Flächenschwerpunkt des Schafts 6 schneiden.

Ferner ist in der schematischen Darstellung der Fig. 4a und der Fig. 4b erkennbar, dass der Schaft 6 mehrere Schaftfortsätze 6b aufweist. Die Schaftfortsätze 6b erstrecken sich entlang bzw. parallel zu der Einschubrichtung (dargestellt als Doppelpfeil) und weisen jeweils am Ende des Schaftfortsatzes 6b, bzw. dem Präparationsabschnitt 5 gegenüberliegend, einen Vorsprung 6c auf.

Der Vorsprung 6c ist in Fig. 4a z.B. als ein Reibelement ausgebildet und stützt sich insbesondere schräg gegen die Wandung 12 der Modellbasis 2 innerhalb der Aufnahmekavität 3 hin ab. In der Fig. 4 b ist der Vorsprung 6c, in einer alternativen Variante, als Kombination einer Rastnase und einem Reibelement ausgebildet gut zu erkennen. Vorteilhafterweise können die Stirnflächen 6e des Vorsprungs 6c, ob als Rastnase oder als Reibelement ausgebildet, auch als Supportflächen für die Herstellung in einem generischen Verfahren herangezogen werden. Diese Vorgehensweise reduziert den Nachbearbeitungsaufwand erheblich, da der potentiell entstehende Überstand der Supportfläche, insbesondere in axialer Richtung, dahingehend genutzt werden kann, um den Zahnstumpf 4 entgegen der Einschubrichtung aus der Modellbasis 2 zu drücken.

Hierzu ist an der Modellbasis 2, insbesondere an der Unterseite 2a der Modellbasis 2 eine Aussparung in Form einer Mulde 13 vorgesehen. Die Mulde 13 ist unterhalb der Aufnahmekavität 3, insbesondere am unteren Ende der Durchgangsöffnung 3b vorgesehen. Die Schaftfortsätze 6b können mit dem Rand der Mulde 13 abschließen wie in Fig. 4a dargestellt oder sich zumindest teilweise in die Mulde 13 hinein erstrecken, wie in Fig. 4b gezeigt.

Die Mulde 13 ist hier jeweils z.B. in Form und Größe einem Finger, insbesondere eines Daumens nachempfunden. Die Mulde 13 kann selbstverständlich auch als eine für ein Werkzeug vorgesehen Aufnahme ausgeführt sein. Durch einen gezielten leichten Druck auf die Stirnfläche 6e des Schaftfortsatzes 6b, lässt sich nun der Schaft 6 aus der Sollposition in der Aufnahmekavität 3 wieder herausbewegen und anschließend sehr einfach aus der Modellbasis 2 bzw. aus der Aufnahmekavität 3 herausnehmen, ohne eine erhöhte Zugkraft an den Präparationsabschnitt 5 bzw. an die Präparation (nicht dargestellt) anlegen zu müssen. Der leichte Druck auf die Stirnfläche 6e in Richtung entgegen der Einschubrichtung ermöglicht die Bewegung des Schaftes, wenn der Vorsprung 6c als reines Reibelement ausgebildet ist, da in diesem Fall nur die zwischen Wandung 12 und dem schrägen Vorsprung 6c wirkende Reibungskraft überwunden werden muss. Liegt eine Verrastung vor, muss der Vorsprung 6c zuerst nach innen bewegt werden, also eine Lösung der Verrastung stattfinden, bevor durch Druck auf die Stirnfläche 6e der Schaft 6 aus der Sollposition in der Aufnahmekavität 3 herausbewegt werden kann.

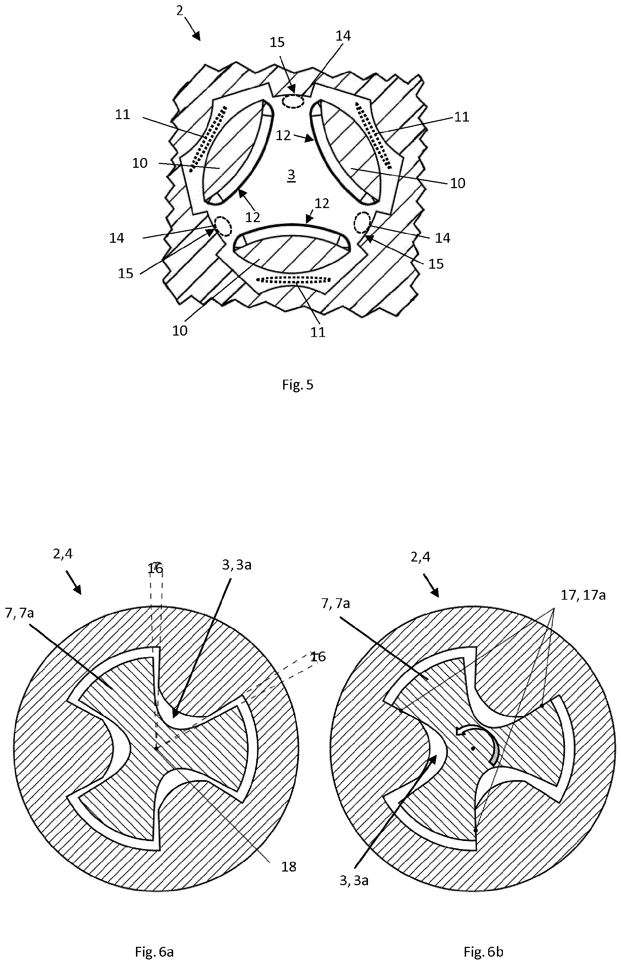

In der Fig. 5 wird in einer weiteren schematischen Darstellung, ein Schnitt durch die Modellbasis 2 in einer Draufsicht gezeigt. Der Schnittdarstellung repräsentiert nur den Bereich um die Aufnahmekavität 3. Dementsprechend gut sichtbar ist die Aufnahmekavität 3 und die in der Aufnahmekavität 3 angeordneten Positionierungsarme 10. Gut zu erkennen ist auch, dass zwischen der Modellbasis 2 und dem Positionierungselement 10 der Hinterschnitt 11 (hervorgehoben durch eine gepunktete Linie) vorgesehen ist.

Erkennbar ist auch, dass die Modellbasis 2 eine die Aufnahmekavität 3 begrenzende Wandung 12 aufweist und diese zumindest teilweise durch den Positionierungsarm 10 gebildet wird. In einer weiteren Ausgestaltung erstreckt sich der Positionierungsarm 10 in axialer Richtung, insbesondere parallel zur Einschubrichtung, wodurch eine Führung während des Einschiebens des Schafts 6 (nicht sichtbar, s. a. Fig. 4) in die Modellbasis 2 gewährleistet ist. Zudem ist die Oberfläche des Positionierungsarms 10 welche einen Teil der Wandung 12 ausbildet teilweise z.B. konvex.

Zusätzlich kann die Oberfläche des Schafts 6 (nicht dargestellt, s. a. Fig. 4) und/oder des Schaftfortsatzes 6a (nicht dargestellt, s. a. Fig. 4) auch teilweise konkav ausgebildet sein. Durch diese spezielle Formgebung kann ein Verdrehen des Schafts 6 in der Modellbasis 2 verhindert werden.

Insbesondere sichtbar ist, dass in dieser besonders Variante, die Modellbasis 2 drei Positionierungsarme 10 aufweist. Es sei allerdings auch darauf hingewiesen, dass Ausführungen mit zwei, vier oder sechs Positionierungsarmen 10, unabhängig von der Anzahl der Schaftfortsätze 6b vorstellbar sind.

Ferner ist erkennbar, dass die Positionierungsarme 10 einen in axialer Richtung, insbesondere parallel zur Einschubrichtung bzw. der Einschubachse, erstreckenden Zwischenraum 14 (schematisch durch die eingeschlossene Fläche der gestrichenen Linie dargestellt) ausbilden können. Der Zwischenraum 14 ist zum Einschieben für einen Schaftfortsatz 6b, insbesondere für den Vorsprung 6c vorgesehen, wobei der Zwischenraum 14 eine Art Führung für den Schaft 6 ausbildet und hierdurch zu einer Verbesserung der Genauigkeit der Ausrichtung des Schafts 6 in der Modellbasis 2 beiträgt. Zudem ist in diesem Bereich des Zwischenraums 14 auch eine optionale Wandung 15 der Modellbasis 2 zu erkennen, der auch als Anlagefläche für den Vorsprung 6c vorgesehen ist.

In den Fig. 6a und Fig. 6b ist nun die Schnittebene A - A der Fig. 4a bzw. Fig. 4b durch den Schaft 6, insbesondere durch den Absatz 7 bzw. durch ein Absatzsegment 7a dargestellt. Zudem ist in der Schnittdarstellung teilweise die Modellbasis 2 in einer Draufsicht gezeigt. Die Schnittdarstellung repräsentiert nur den Bereich um die Aufnahmekavität 3.

In der Fig. 6a ist eine neutrale, nicht verdrehte Position A des Zahnstumpfs 4 visualisiert. Erkennbar ist ein unerwünscht großes Spaltmaß 16, welches aufgrund herstellungsbedingter Toleranzen oder nachträglichem Schrumpfen des Schafts 6 resultieren könnte. Aus der Fig. 6b, Position B, wird ersichtlich, wie einer Verdrehung des Schafts 6 um den Wert des Spaltmaßes 16 um den Drehpunkt 18 formschlüssig durch Ausbildung von Kontaktflächen 17 entgegengewirkt wird. Gut zu erkennen ist, dass der Absatz 7, 7a flügelartig in radialer Richtung nach Außen von dem Schaft 6 absteht. Ferner ist zu erkennen, dass die geometrische Form der Einschiebeöffnung 3a an den flügelartig ausgebildeten Absatz 7, 7a angepasst ist und hierdurch eine formschlüssige Verdrehsicherung durch Ausbildung von Kontaktflächen 17 ausbildet.

Der Absatz 7, 7a muss nicht notwendigerweise dreiflügelig ausgelegt sein. Vorstellbar ist auch eine Ausführung mit nur einem oder zwei Flügel. Allerdings ist es von Vorteil, wenn die Summe der an den Kontaktpunkten 17a bei einer Verdrehung um das Spaltmaß 16, zwischen der Modellbasis 2 und dem Absatz 7, 7a auftretenden Kräfte sich im Gleichgewicht befinden. Die Kontaktflächen 17 können daher zwischen Schaftfortsätzen 6a und den Positionierungsarmen 10 der Modellbasis 2 ausgelegt sein.

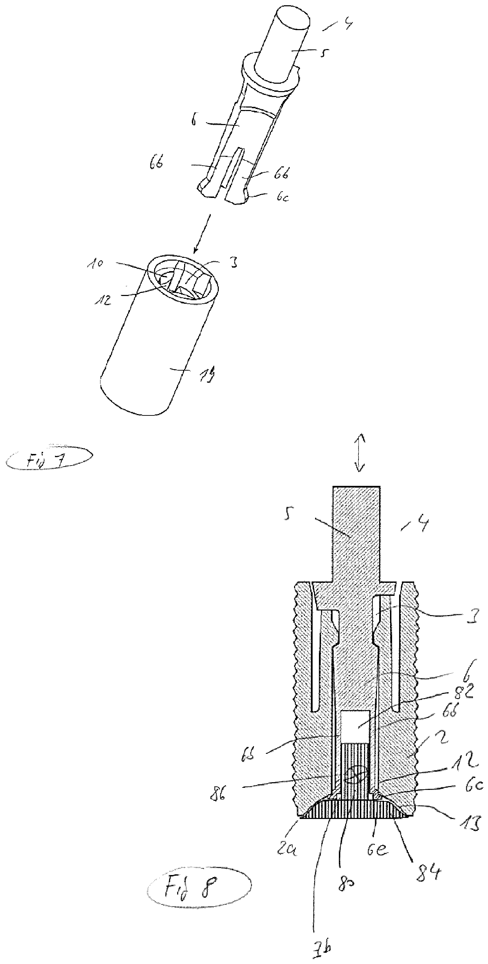

Fig. 7 zeigt eine exemplarische, schematische dreidimensionale Darstellung eines Zahnstumpfs 4 (wie z.B. aus der Fig. 3) mit einem Koppelelement 19. Das Koppelelement 19, bildet bzw. umfasst ebenso wie die Modellbasis 2 (nicht dargestellt, s. Fig. 2) eine zugehörige Aufnahmekavität 3 für einen herausnehmbaren Zahnstumpf 4, wobei der Zahnstumpf 4 einen Präparationsabschnitt 5 und einen Schaft 6 aufweist. Der Präparationsabschnitt 5 ist zur prothetischen Rekonstruktion eines Zahns und der Schaft 6 zum Einsetzten entlang einer Einschubrichtung in die Aufnahmekavität 3 in dem Koppelelement 19 vorgesehen.

Ebenso wie die Modellbasis 2 bildet das Koppelelement 19 eine die Aufnahmekavität 3 begrenzende Wandung 12 aus, wobei der Positionierungsarm 10 zumindest einen Teil der Wandung 12 ausbildet. Die äußere Formgebung des Koppelelements 19 ist nicht an die Formgebung der Modellbasis 2 (nicht dargestellt, s. Fig. 2) gebunden und kann sowohl als geometrischer Körper mit kreisrunder, elliptischer, oder eckiger Grundfläche ausgebildet sein. Das Koppelelement 19 kann beispielsweise zur sicheren Aufbewahrung eines herausnehmbaren Zahnstumpfs 4 dienen, oder auch die Handhabung des Zahnstumpfs 4 während einer handwerklichen Präparation verbessern. Zum Beispiel lässt sich der Zahnstumpf 4 mit dem Koppelelement 19 einfach und genau in einer Spannvorrichtung fixieren.

Fig. 8 zeigt eine schematische Ansicht eine weitere Variante eines Zahnstumpfes 4, sowie zum Teil eine Modellbasis 2, jeweils in einer geschnittenen Darstellung. Zahnstumpf bzw. Modellbasis können dabei einen Teil oder alle die bezüglich Fig. 4b diskutierten Elemente aufweisen. In Fig. 8 wird insbesondere der Zahnstumpf 4 bzw. der Schaft 6 in der Modellbasis 2, insbesondere in der zugehörigen Aufnahmekavität 3 dargestellt, wobei sich der Zahnstumpf 4 in der Sollposition befindet. Ferner ist in der schematischen Darstellung der Fig. 7 erkennbar, dass der Schaft 6 mehrere Schaftfortsätze 6b aufweist. Die Schaftfortsätze 6b erstrecken sich entlang bzw. parallel zu der Einschubrichtung (dargestellt als Doppelpfeil) und weisen jeweils am Ende des Schaftfortsatzes 6b, bzw. dem Präparationsabschnitt 5 gegenüberliegend, einen Vorsprung 6c auf.

Der Vorsprung 6c ist in Fig. 8 als Rastnase ausgebildet und stützt sich gegen die Wandung 12 der Modellbasis 2 innerhalb der Aufnahmekavität 3 hin ab. Um den Schaft 6 aus der Aufnahmekavität 3 herausbewegen zu können, muss die Verrastung zwischen Vorsprung 6c und Wandung 12 gelöst werden, indem der Vorsprung 6c nach innen bewegt wird. Im Falle der mehreren Schaftfortsätze 6b bedeutet dies, dass im Falle dessen diese alle den Rastvorsprung aufweisen, für alle Schaftfortsätze 6b die Verrastung gelöst werden muss. Dies kann dadurch erfolgen, dass die Schaftfortsätze 6b (z.B. nach innen) aufeinander zubewegt werden. Nun kann durch Druck auf die Stirnflächen 6e der jeweiligen Schaftfortsätze 6b der Schaft 6 aus der Sollposition in der Aufnahmekavität 3 herausbewegt werden.

Um ein unbeabsichtigtes Sich-Lösen der durch den oder die Vorsprünge 6c gebildeten Verrastung zu verhindern, kann ein Blockierelement mit einem Fuß 80 Verwendung finden. Der Fuß 80 kann allgemein dazu ausgebildet sein, mit dem oder den Schaftfortsätzen 6b in einen formschlüssigen Kontakt gebracht zu werden, wobei aufgrund des Kontakts das Lösen der Rastverbindung oder allgemein der formschlüssigen Verbindung blockiert wird. In dem Beispiel der Figur 8 weißt der Schaft einen Hohlraum 82 auf, der von den Schaftfortsätzen 6b insbesondere zylindrisch umgeben wird. Wird nun der Fuß 80 in den Hohlraum 82 von unten eingesteckt, blockiert der Fuß 80 eine Bewegung der Schaftfortsätze 6b nach innen in den Hohlraum hinein, sodass sich die durch die Vorsprünge gebildete Verrastung aufgrund des Formschlusses mit dem Fuß 80 nicht mehr lösen kann.

In der Fig. 8 ist an der Modellbasis 2, insbesondere an der Unterseite 2a der Modellbasis 2 eine Aussparung in Form einer Mulde 13 vorgesehen. Die Mulde 13 ist unterhalb der Aufnahmekavität 3, insbesondere am unteren Ende der Durchgangsöffnung 3b vorgesehen. Das Blockierelement kann ferner einen Kopf 84 aufweisen, wobei der Fuß 80 am Kopf 84 angeordnet ist und der Kopf den Fuß seitlich überragt, wobei die Mulde 13 dazu ausgebildet ist, den Kopf 84 aufzunehmen. Die Aufnahme des Kopfes 84 in der Muld 13 erfolgt dabei z.B. so, dass aufgrund der Aufnahme des Kopfes 84 in der Mulde 13 eine flüssigkeitsdichte oder gar eine gasdichte Abdichtung der Modellbasis 2 von unten realisiert wird.

Während in der Fig. 8 der Fuß 80 in der mit Doppelpfeil markierten Einschubrichtung in den Hohlraum 82 von unten eingeschoben wird, ist es auch möglich, den Fuß 80 von der Seite, also z.B. in einer zur der mit Doppelpfeil markierten Einschubrichtung senkrechten Richtung in den Hohlraum 82 einzubringen. Dies kann auf Höhe des mit einem X markierten Position 86 erfolgen, also in der Fig. 8 in die Zeichenebene hinein erfolgen. Auch in diesem Fall wird durch den Fuß 80 gewährleistet, dass aufgrund des Formschlusses des Fußes 80 mit dem oder den Schaftfortsätzen 6b eine Bewegung der Schaftfortsätze 6b und damit der Vorsprünge 6c verhindert wird - die Verrastung mit der Wandung kann also gesichert werden. Erst nach Entfernen des Fußes 80 können die Schaftfortsätze dergestalt bewegt werden, dass die Verrastung gelöst wird und der Zahnstumpf 4 aus der Modellbasis 2 entfernt werden kann.

### BEZUGSZEICHENLISTE

- 1: Dentalmodel
- 2: Modellbasis
- 2a: Unterseite
- 3: Aufnahmekavität
- 3a: Einschiebeöffnung
- 3b: Durchgangsöffnung
- 4: Zahnstumpf
- 5: Präparationsabschnitt
- 5a: Präparationsgrenze
- 6: Schaft
- 6a: Hohlkehle
- 6b: Schaftfortsatz
- 6c: Vorsprung
- 6d: Eingriffsvertiefung
- 6e: Stirnfläche
- 7: Absatz
- 7a: Absatzsegmente
- 7b: Auflagefläche
- 8: Einschubindikator
- 9: Aufnahme
- 10: Positionierungselement
- 10a: Vorsprung
- 10b: Stirnseite
- 11: Hinterschnitt
- 12: Wandung
- 13: Mulde
- 14: Zwischenraum
- 15: Wandung
- 16: Spaltmaß
- 17: Kontaktfläche
- 17a: Kontaktpunkt
- 18: Drehpunkt
- 19: Koppelelement
- 80: Fuß
- 82: Hohlraum
- 84: Kopf
- 86: Position

## Patentansprüche

1. Dentalmodell (1) für eine zahntechnische Modellierung mit einer Modellbasis (2) und mit einem aus der Modellbasis (2) herausnehmbaren Zahnstumpf (4), wobei die Modellbasis (2) eine Aufnahmekavität (3) zur Aufnahme des Zahnstumpfes (4) aufweist, wobei der Zahnstumpf (4) einen Präparationsabschnitt (5) und einen Schaft (6) aufweist, wobei der Präparationsabschnitt (5) zur prothetischen Rekonstruktion eines Zahns und der Schaft (6) zum Einsetzen entlang einer Einschubrichtung in die Aufnahmekavität (3) ausgebildet ist, wobei die Modellbasis (2) und/oder der Schaft (6) ein elastisches Positionierungselement zum Positionieren des Zahnstumpfes (4) relativ zur Modellbasis (2) aufweisen, **dadurch gekennzeichnet, dass** der Schaft (6) einen Absatz (7) aufweist, wobei der Absatz (7) als Anschlag ausgebildet ist und hierdurch in axialer Richtung des Zahnstumpfes (4) die Tiefe der Sollposition des Schafts (6) in der Aufnahmekavität (3) begrenzt, wobei der Absatz (7) eine Mehrzahl der den Anschlag bildenden Absatzsegmenten (7a) aufweist, wobei die Absatzsegmente (7a) eine unterschiedliche Ausdehnung in axialer Richtung aufweisen.

2. Dentalmodell nach Anspruch 1, wobei das Positionierungselement der Modellbasis einen Positionierungsarm (10) umfasst und/oder das Positionierungselement des Schafts (6) einen Schaftfortsatz (6b) umfasst.

3. Dentalmodell nach Anspruch 2, wobei der Positionierungsarm (10) und/oder der Schaftfortsatz (6b) zum formschlüssig lösbaren Verbinden der Modellbasis (2) mit dem Zahnstumpf (4), insbesondere mittels einer Rastverbindung, ausgebildet ist.

4. Dentalmodell nach einem der vorigen Ansprüche, ferner mit einem Vorsprung (6c, 10a) des Schafts oder der Modellbasis, wobei der Schaft (6) im in der Modellbasis (2) aufgenommenen Zustand eine Sollposition einnimmt, wobei der Vorsprung dazu ausgebildet ist, den Schaft (6) und die Modellbasis (2) zueinander zur Einnahme der Sollposition auszurichten.

5. Dentalmodell nach Anspruch 4, ferner mit einer zum Vorsprung gegenstückigen Eingriffsvertiefung (6d), wobei die Eingriffsvertiefung und der Vorsprung dazu ausgebildet sind, den Schaft (6) und die Modellbasis (2) zueinander zur Einnahme der Sollposition auszurichten, wobei der Positionierungsarm (10) und der Schaft (6) die gegenstückige Kombination der Eingriffsvertiefung und des Vorsprungs aufweisen und/oder der Schaftfortsatz (6b) und die Modellbasis (2) die gegenstückige Kombination der Eingriffsvertiefung und des Vorsprungs aufweisen, wobei insbesondere die Rastverbindung durch die gegenstückige Kombination der Eingriffsvertiefung und des Vorsprungs gegeben ist,
wobei die Modellbasis (2) beispielsweise eine die Aufnahmekavität (3) begrenzende Wandung (12, 15) aufweist, wobei der Schaftfortsatz (6b) und die Wandung (12, 15) die gegenstückige Kombination der Eingriffsvertiefung und des Vorsprungs aufweisen.

6. Dentalmodell nach Anspruch 5, wobei die Eingriffsvertiefung (6d) einen maximalen Tiefbereich, insbesondere Tiefpunkt, aufweist, wobei die Sollposition durch einen Eingriff des Vorsprungs in den maximalen Tiefbereich definiert ist, wobei insbesondere die Form der Eingriffsvertiefung durch eine Rundung, Kegelstumpfform, Pyramidenform oder V-Form gegeben ist.

7. Dentalmodell nach einem der vorigen Ansprüche 4-6, wobei der Vorsprung (6c, 10a) eine Rastnase und/oder ein Reibelement umfasst.

8. Dentalmodell nach einem der vorigen Ansprüche 2-7, wobei die Modellbasis (2) eine die Aufnahmekavität (3) begrenzende Wandung (12) aufweist, wobei der Positionierungsarm (10) zumindest einen Teil der Wandung (12) ausbildet, und/oder
wobei sich der Positionierungsarm (10) und der Schaftfortsatz (6b) in axialer Richtung, insbesondere parallel zur Einschubrichtung erstrecken, und/oder
wobei die Modellbasis (2) eine Mehrzahl, insbesondere drei der Positionierungsarme (10) und/oder der Schaft (6) eine Mehrzahl, insbesondere drei der Schaftfortsätze (6b) aufweist.

9. Dentalmodell nach Anspruch 8, wobei durch jeweils zwei der Positionierungsarme (10) ein sich in axialer Richtung, insbesondere parallel zur Einschubrichtung erstreckender Zwischenraum (14) gebildet wird, wobei der Zwischenraum (14) zur Aufnahme des Schaftfortsatzes (6b) ausgebildet ist,
wobei der Zwischenraum (14) für den Schaftfortsatz (6b) beispielsweise eine Führung beim Einschieben bildet.

10. Dentalmodell einem der vorigen Ansprüche, wobei die Aufnahmekavität (3) die Modellbasis (2) durchdringt und am oberen Ende eine Einschiebeöffnung (3a) und am unteren Ende eine Durchgangsöffnung (3b) aufweist.

11. Dentalmodell nach einem der vorigen Ansprüche 4-10, wobei die Modellbasis (2) im Bereich der Durchgangsöffnung (3b) eine Mulde (13) aufweist, wobei der Schaftfortsatz (6b) sich durch die Durchgangsöffnung (3b) zumindest teilweise in die Mulde (13) hinein erstreckt wobei die formschlüssig lösbare Verbindung aus einem Eingriff des Vorsprungs (6c) in die Mulde (13) resultiert.

12. Dentalmodell nach einem der vorigen Ansprüche, wobei die Absatzsegmente (7a) flügelartig in radialer Richtung des Zahnstumpfes (4) nach Außen von dem Schaft (6) abstehen und/oder
wobei die geometrische Form der Einschiebeöffnung (3a) an die Form der flügelartig ausgebildeten Absatzsegmente (7a) angepasst ist und mit den Absatzsegmenten (7a) eine formschlüssige Verdrehsicherung ausbildet und/oder
wobei an dem Schaft (6), insbesondere an einem Absatzsegment (7a) des Schafts (6), ein Einschubindikator (8) angeordnet ist und/oder
wobei das Dentalmodell ein Koppelelement (19) aufweist und/oder
wobei der Schaft (6) in der Aufnahmekavität (3) mit der Modellbasis (2), insbesondere über den Vorsprung, reibschlüssig lösbar verbunden ist.

13. Dentalmodell nach Anspruch 12, ferner mit einem Blockierelement, wobei das Blockierelement dazu ausgebildet ist, ein Lösen der formschlüssig lösbaren Verbindung des Schaftfortsatzes (6b) zu blockieren.

14. Dentalmodell nach Anspruch 13, wobei das Blockierelement einen Fuß (80) aufweist, wobei der Fuß (80) dazu ausgebildet ist, mit dem Schaftfortsatz (6b) in einen formschlüssigen Kontakt gebracht zu werden, wobei aufgrund des Kontakts das Lösen der formschlüssig lösbaren Verbindung blockiert wird, wobei insbesondere die Modellbasis (2) eine Mehrzahl der Schaftfortsätze (6b) aufweist, wobei der Schaft dazu ausgebildet, den Fuß (80) in dem zwischen den mehreren Schaftfortsätzen gebildeten Hohlraum (82) aufzunehmen, wobei im in dem Hohlraum (82) aufgenommenen Zustand des Fußes (80) der formschlüssige Kontakt gegeben ist,
wobei das Blockierelement beispielsweise einen Kopf (84) aufweist, wobei der Fuß (80) am Kopf angeordnet ist und der Kopf (84) den Fuß (80) seitlich überragt, wobei die Mulde (13) dazu ausgebildet ist, den Kopf (84) aufzunehmen.

15. Verfahren zur Herstellung eines Dentalmodells nach einem der vorhergehenden Ansprüche, aufweisend die nachfolgenden Verfahrensschritte:
- Generieren einer dreidimensionalen Darstellung eines virtuellen Dentalmodells für eine zahntechnische Modellierung, mit einer virtuellen Modellbasis (2) auf Grundlage vorhergehenden Aufnahme mit einem bildgebenden Verfahren, insbesondere einem intraoralen Scan und/oder einer digitalen Volumentomographie und/oder eines Scans eines Gipsabdrucks und/oder Gipsmodels,
- Festlegen einer virtuellen Aufnahmekavität (3) in der virtuellen Modellbasis (2) des virtuellen Dentalmodells für den virtuellen Zahnstumpf (4),
- Generieren eines Datensatzes auf Grundlage der erfolgten Festlegung,
- Verwenden dieses Datensatzes zur Herstellung des Dentalmodells im Wege eines additiven Herstellungsverfahrens, wobei der Zahnstumpf (4) dem virtuellen Zahnstumpf (4) zugehörig ist.

## Claims

1. A dental model (1) for a dental modeling, comprising a model base (2) and comprising a tooth stump (4) that can be removed from the model base (2), the model base (2) comprising a receiving cavity (3) for receiving the tooth stump (4), the tooth stump (4) comprising a preparation section (5) and a shaft (6), the preparation section (5) being designed for the prosthetic reconstruction of a tooth and the shaft (6) being designed for insertion into the receiving cavity (3) along an insertion direction, the model base (2) and/or the shaft (6) comprising an elastic positioning element for positioning the tooth stump (4) relative to the model base (2), **characterized in that** the shaft (6) has a shoulder (7), the shoulder (7) being designed as a stop and, as a result, the depth of the target position of the shaft (6) in the receiving cavity (3) being limited in the axial direction of the tooth stump (4), the shoulder (7) comprising a plurality of shoulder segments (7a) forming the stop, and the shoulder segments (7a) having different extents in the axial direction.

2. The dental model according to claim 1, wherein the positioning element of the model base comprises a positioning arm (10) and/or the positioning element of the shaft (6) comprises a shaft extension (6b).

3. The dental model according to claim 2, wherein the positioning arm (10) and/or the shaft extension (6b) are designed for a form-locked and detachable connection of the model base (2) to the tooth stump (4), in particular by means of a detent connection.

4. The dental model according to any one of the preceding claims, furthermore comprising a projection (6c, 10a) of the shaft or the model base, the shaft (6) assuming a target position when received in the model base (2), and the projection being designed to align the shaft (6) and the model base (2) with one another to assume the target position.

5. The dental model according to claim 4, furthermore comprising an engagement depression (6d) that complements the projection, the engagement depression and the projection being designed to align the shaft (6) and the model base (2) with one another to assume the target position, the positioning arm (10) and the shaft (6) having the complementary combination of the engagement depression and the projection and/or the shaft extension (6b) and the model base (2) having the complementary combination of the engagement depression and the projection, and in particular the detent connection being provided by the complementary combination of the engagement depression and the projection, the model base (2), for example, comprising a wall (12, 15) delimiting the receiving cavity (3), and the shaft extension (6b) and the wall (12, 15) having the complementary combination of the engagement depression and the projection.

6. The dental model according to claim 5, wherein the engagement depression (6d) has a maximum deep region, in particular a low point, the target position being defined by an engagement of the projection in the maximum deep region, and in particular the shape of the engagement depression being provided by a rounding, truncated cone shape, pyramid shape or V-shape.

7. The dental model according to any one of the preceding claims 4 to 6, wherein the projection (6c, 10a) comprises a catch lug and/or a friction element.

8. The dental model according to any one of the preceding claims 2 to 7, wherein the model base (2) comprises a wall (12) delimiting the receiving cavity (3), the positioning arm (10) forming at least part of the wall (12), and/or
wherein the positioning arm (10) and the shaft extension (6b) extend in the axial direction, in particular parallel to the insertion direction, and/or
wherein the model base (2) comprises a plurality, in particular three, of the positioning arms (10) and/or the shaft (6) comprises a plurality, in particular three, of the shaft extensions (6b).

9. The dental model according to claim 8, wherein an intermediate space extending (14) in the axial direction, in particular parallel to the insertion direction, is formed in each case by two of the positioning arms (10), the intermediate space (14) being designed to receive the shaft extension (6b), and
the intermediate space (14) forming a guide, for example, for the shaft extension (6b) during insertion.

10. The dental model according to any one of the preceding claims, wherein the receiving cavity (3) penetrates the model base (2) and has an insertion opening (3a) at the upper end and a through-opening (3b) at the lower end.

11. The dental model according to any one of the preceding claims 4 to 10, wherein the model base (2) has a trough (13) in the region of the through-opening (3b), the shaft extension (6b) extending through the through-opening (3b) and at least partially into the trough (13), and the form-locked and detachable connection resulting from an engagement of the projection (6c) in the trough (13).

12. The dental model according to any one of the preceding claims, wherein the shoulder segments (7a) protrude wing-like in the radial direction of the tooth stump (4) outwardly from the shaft (6) and/or
wherein the geometric shape of the insertion opening (3a) is adapted to the shape of the wing-like shoulder segments (7a) and forms a form-locked anti-turn device with the shoulder segments (7a) and/or
wherein an insertion indicator (8) is arranged at the shaft (6), in particular at a shoulder segment (7a) of the shaft (6) and/or
wherein the dental model comprises a coupling element (19) and/or
wherein the shaft (6) in the receiving cavity (3) is detachably connected to the model base (2) in a frictionally engaged manner, in particular by way of the projection.

13. The dental model according to claim 12, furthermore comprising a blocking element, the blocking element being designed to block a detachment of the form-locked and detachable connection of the shaft extension (6b).

14. The dental model according to claim 13, wherein the blocking element comprises a foot (80), the foot (80) being designed to be brought into form-locked contact with the shaft extension (6b), the detachment of the form-locked and detachable connection being blocked as a result of the contact, in particular the model base (2) comprising a plurality of the shaft extensions (6b), the shaft being designed to receive the foot (80) in the cavity (82) formed among the plurality of shaft extensions, and the form-locked contact being provided when the foot (80) is received in the cavity (82),
the blocking element, for example, comprising a head (84), the foot (80) being arranged at the head, the head (84) projecting laterally beyond the foot (80), and the trough (13) being designed to receive the head (84).

15. A method for producing a dental model according to any one of the preceding claims, comprising the following method steps:
- generating a three-dimensional representation of a virtual dental model for dental modeling, comprising a virtual model base (2) based on a previous image using an imaging method, in particular an intraoral scan and/or digital volume tomography and/or a scan of a plaster cast and/or plaster model;
- defining a virtual receiving cavity (3) in the virtual model base (2) of the virtual dental model for the virtual tooth stump (4);
- generating a data set based on the definition made; and
- using this data set for producing the dental model by way of an additive manufacturing process, wherein the tooth stump (4) is associated with the virtual tooth stump (4).

## Revendications

1. Modèle dentaire (1) pour une modélisation de technique dentaire avec une base de modèle (2) et un moignon de dent (4) détachable de la base de modèle (2), dans lequel la base de modèle (2) présente une cavité de réception (3) pour la réception du moignon de dent (4), où le moignon de dent (4) présente une section de préparation (5) et une tige (6), où la section de préparation (5) est conçue pour la reconstruction prothétique d'une dent et la tige (6) pour l'implantation le long d'une direction d'insertion dans la cavité de réception (3), où la base de modèle (2) et/ou la tige (6) présentent un élément de positionnement élastique pour le positionnement du moignon de dent (4) par rapport à la base de modèle (2), **caractérisé en ce que** la tige (6) présente un palier (7),
dans lequel le palier (7) est conçu en tant que butée et délimite ainsi la profondeur de la position souhaitée de la tige (6) dans la cavité de réception (3) dans la direction axiale du moignon de dent (4), où le palier (7) présente une multiplicité de segments de palier (7a) formant la butée, où les segments de palier (7a) présentent une extension variable en direction axiale.

2. Modèle dentaire selon la revendication 1, dans lequel l'élément de positionnement de la base de modèle comprend un bras de positionnement (10) et/ou l'élément de positionnement de la tige (6) comprend un pédoncule de tige (6b).

3. Modèle dentaire selon la revendication 2, dans lequel le bras de positionnement (10) et/ou le pédoncule de tige (6b) sont conçus pour la liaison amovible par complémentarité des formes de la base de modèle (2) avec le moignon de dent (4), en particulier au moyen d'une liaison en butée.

4. Modèle dentaire selon l'une des revendications précédentes, pourvu en outre d'une saillie (6c, 10a) de la tige ou de la base de modèle, dans lequel la tige (6) adopte une position souhaitée dans l'état réceptionné dans la base de modèle (2), où la saillie est conçue pour orienter la tige (6) et la base de modèle (2) l'une par rapport à l'autre pour l'adoption de la position souhaitée.

5. Modèle dentaire selon la revendication 4, pourvu en outre d'une cavité d'engrenage (6d) complémentaire à la saillie, où la cavité d'engrenage et la saillie sont conçues pour orienter la tige (6) et la base de modèle (2) l'une par rapport à l'autre pour l'adoption de la position souhaitée, où le bras de positionnement (10) et la tige (6) présentent la combinaison complémentaire de la cavité d'engrenage et de la saillie et/ou le pédoncule de tige (6b) et la base de modèle (2) présentent la combinaison complémentaire de la cavité d'engrenage et de la saillie, où, en particulier la liaison en butée est donnée par la combinaison complémentaire de la cavité d'engrenage et de la saillie,
dans lequel la base de modèle (2) présente par exemple une paroi (12, 15) délimitant la cavité de réception (3), où le pédoncule de tige (6b) et la paroi (12, 15) présentent la combinaison complémentaire de la cavité d'engrenage et de la saillie.

6. Modèle dentaire selon la revendication 5, dans lequel la cavité d'engrenage (6d) présente une zone de profondeur maximale, en particulier un point bas, où la position souhaitée est définie par une prise de la saillie dans la zone de profondeur maximale, où, en particulier, la forme de la cavité d'engrenage est donnée par un arrondi, une forme de cône tronqué, une forme pyramidale ou une forme en V.

7. Modèle dentaire selon l'une des revendications précédentes 4 à 6, dans lequel la saillie (6c, 10a) comprend un nez de butée et/ou un élément de friction.

8. Modèle dentaire selon l'une des revendications précédentes 2 à 7, dans lequel la base de modèle (2) présente une paroi (12) délimitant la cavité de réception (3), où le bras de positionnement (10) constitue au moins une partie de la paroi (12), et/ou
dans lequel le bras de positionnement (10) et le pédoncule de tige (6b) s'étendent en direction axiale, en particulier parallèlement à la direction d'insertion, et/ou
dans lequel la base de modèle (2) présente une multiplicité, en particulier, trois parmi les bras de positionnement (10), et/ou la tige (6) présentent une multiplicité, en particulier trois, parmi les pédoncules de tige (6b).

9. Modèle dentaire selon la revendication 8, dans lequel, par respectivement deux des bras de positionnement (10), il se forme un espace intermédiaire (14) s'étendant en direction axiale, en particulier, parallèlement à une direction d'insertion, où l'espace intermédiaire (14) est conçu pour la réception du pédoncule de tige (6b),
dans lequel l'espace intermédiaire (14) forme par exemple un guidage lors de l'insertion pour le pédoncule de tige (6b).

10. Modèle dentaire selon l'une des revendications précédentes, dans lequel la cavité de réception (3) traverse la base de modèle (2) et présente un orifice d'insertion (3a) sur l'extrémité supérieure et un orifice de passage (3b) sur l'extrémité inférieure.

11. Modèle dentaire selon l'une des revendications précédentes 4 à 10, dans lequel la base de modèle (2) présente un creux (13) dans la zone de l'orifice de passage (3b), où le pédoncule de tige (6b) s'étend au moins partiellement à l'intérieur du creux (13) par l'orifice de passage (3b), où la liaison par complémentarité des formes amovible résulte d'une prise de la saillie (6c) dans le creux (13).

12. Modèle dentaire selon l'une des revendications précédentes, dans lequel les éléments de palier (7a) s'étendent comme des ailes en direction axiale du moignon de dent (4) vers l'extérieur en partant de la tige (6), et/ou
dans lequel la forme géométrique de l'orifice d'insertion (3a) est adaptée à la forme des éléments de palier (7a) en forme d'ailes et forme une protection anti-torsion par complémentarité des formes avec les segments de palier (7a), et/ou
dans lequel un indicateur d'insertion (8) est disposé sur la tige (6), en particulier, à un élément de palier (7a) de la tige (6), et/ou
dans lequel le modèle dentaire présente un élément de couplage (19), et/ou
dans lequel la tige (6) est reliée par friction de manière amovible avec la base de modèle (2), en particulier par le biais de la saillie, dans la cavité de réception (3).

13. Modèle dentaire selon la revendication 12, pourvu en outre d'un élément de blocage, où l'élément de blocage est conçu pour bloquer un détachement de la liaison par complémentarité des formes amovible du pédoncule de tige (6b).

14. Modèle dentaire selon la revendication 13, dans lequel l'élément de blocage présente un socle (80), où le socle (80) est conçu pour être mis en contact par complémentarité des formes avec le pédoncule de tige (6b), où, en raison du contact, le détachement de la liaison par complémentarité des formes amovible est bloqué, où, en particulier, la base de modèle (2) présente une multiplicité de pédoncules de tige (6b), où la tige est conçue pour contenir le socle (80) dans l'espace creux (82) formé entre les multiples pédoncules de tige, où le contact par complémentarité des formes est donné dans l'état du socle (80) contenu dans l'espace creux (82),
dans lequel l'élément de blocage présente par exemple une tête (84), où le socle (80) est disposé sur la tête et la tête (84) dépasse latéralement du socle (80), où le creux (13) est conçu pour recevoir la tête (84).

15. Procédé de fabrication d'un modèle dentaire selon l'une des revendications précédentes, présentant les étapes de procédé suivantes :
- création d'une représentation tridimensionnelle d'un modèle dentaire virtuel pour une modélisation de technique dentaire, pourvue d'une base de modèle (2) virtuelle sur le fondement d'un enregistrement préalable avec un procédé d'imagerie, en particulier, un balayage intra-oral et/ou une tomographie volumique numérique et/ou un balayage d'une empreinte de plâtre et/ou d'un modèle de plâtre,
- désignation d'une cavité de réception (3) virtuelle dans la base de modèle (2) du modèle dentaire virtuel pour le moignon de dent (4) virtuel,
- création d'un ensemble de données sur le fondement de la désignation effectuée,
- emploi de cet ensemble de données pour la fabrication du modèle dentaire dans le cadre d'un procédé de fabrication additif, où le moignon de dent (4) correspond au moignon de dent (4) virtuel.
